(19) Europäisches Patentamt
European Patent Office
Office européen des brevets

(11) EP 2 262 267 A1

(12) # EUROPEAN PATENT APPLICATION

(43) Date of publication:
**15.12.2010 Bulletin 2010/50**

(21) Application number: **09162456.9**

(22) Date of filing: **10.06.2009**

(51) Int Cl.:
***H04N 7/26*** *(2006.01)* ***H04N 7/32*** *(2006.01)*
***H04N 7/50*** *(2006.01)* ***H04N 7/28*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Panasonic Corporation**
**Kadoma-shi**
**Osaka 571-8501 (JP)**

(72) Inventors:
- **Narroschke, Matthias**
**63225 Langen (DE)**
- **Wittmann, Steffen**
**63225 Langen (DE)**

(74) Representative: **Grünecker, Kinkeldey, Stockmair & Schwanhäusser**
**Anwaltssozietät**
**Leopoldstrasse 4**
**80802 München (DE)**

(54) **Filter coefficient coding scheme for video coding**

(57) The present invention provides a method for encoding, a method for decoding, an apparatus for encoding and an apparatus for decoding a video signal. At the encoder side, filter data for each of one-dimensional components of two-dimensional separable filter are determined. The filter data of a component are provided within the bitstream to a decoder site and stored in a filter memory together with an assigned index value. The decoder site also stores the obtained filter data in the same way as the encoder. At the encoder, for filtering of an image area, each one-dimensional filter component is selected from the filter data stored in the filter memory and the index associated therewith is provided within the bitstream of the encoded video. The decoder extracts the indexes from the bitstream, retrieves the associated filter data from the filter memory, sets up a filter accordingly and filters the image area.

Fig. 13

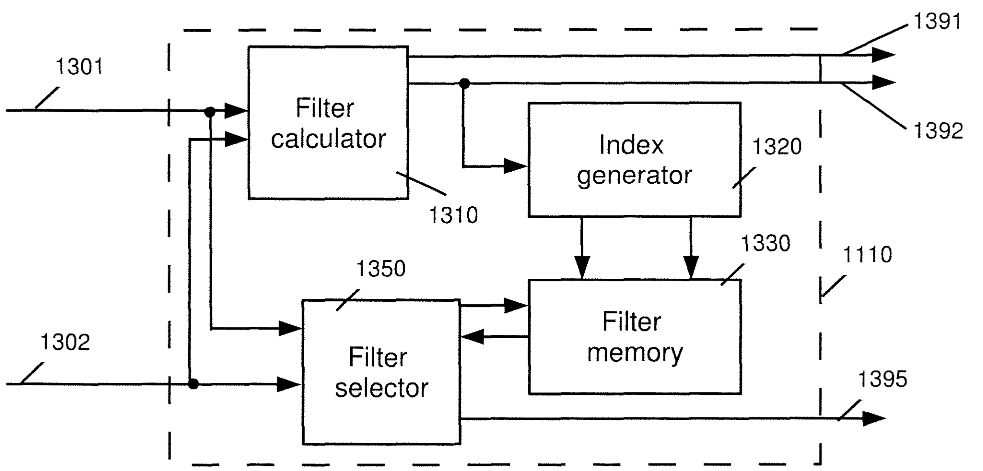


EP 2 262 267 A1

## Description

The present invention relates to a method and an apparatus for video encoding and decoding using filters for filtering of video signals.

BACKGROUND OF THE INVENTION

At present, the majority of standardized video coding algorithms is based on hybrid video coding. Hybrid video coding methods typically combine several different lossless and lossy compression schemes in order to achieve the desired compression gain. Hybrid video coding is also the basis for ITU-T standards (H.26x standards such as H.261, H.263) as well as ISO/IEC standards (MPEG-X standards such as MPEG-1, MPEG-2, and MPEG-4). The most recent and advanced video coding standard is currently the standard denoted as H.264/MPEG-4 advanced video coding (AVC) which is a result of standardization efforts by joint video team (JVT), a joint team of ITU-T and ISO/IEC MPEG groups.

A video signal input to an encoder is a sequence of images called frames, each frame being a two-dimensional matrix of pixels. All the above-mentioned standards based on hybrid video coding include subdividing each individual video frame into smaller blocks consisting of a plurality of pixels. Typically, a macroblock (usually denoting a block of 16 x 16 pixels) is the basic image element, for which the encoding is performed. However, various particular encoding steps may be performed for smaller image elements, denoted submacroblocks or simply blocks and having the size of, for instance, 8 x 8, 4 x 4, 16 x 8, etc.

Typically, the encoding steps of a hybrid video coding include a spatial and/or a temporal prediction. Accordingly, each block to be encoded is first predicted using either the blocks in its spatial neighborhood or blocks from its temporal neighborhood, i.e. from previously encoded video frames. A block of differences between the block to be encoded and its prediction, also called block of prediction residuals, is then calculated. Another encoding step is a transformation of a block of residuals from the spatial (pixel) domain into a frequency domain. The transformation aims at reducing the correlation of the input block. Further encoding step is quantization of the transform coefficients. In this step the actual lossy (irreversible) compression takes place. Usually, the compressed transform coefficient values are further compacted (losslessly compressed) by means of an entropy coding. In addition, side information necessary for reconstruction of the encoded video signal is encoded and provided together with the encoded video signal. This is for example information about the spatial and/or temporal prediction, amount of quantization, etc.

Figure 1 is an example of a typical H.264/MPEG-4 AVC standard compliant video encoder 100. The H. 264/MPEG-4 AVC standard combines all above-mentioned encoding steps. A subtractor 105 first determines differences between a current block to be encoded of an input video image (input signal) and a corresponding prediction block, which is used for the prediction of the current block to be encoded. In H.264/MPEG-4 AVC, the prediction signal is obtained either by a temporal or by a spatial prediction. The type of prediction can be varied on a per frame basis or on a per macroblock basis. Macroblocks predicted using temporal prediction are called inter-encoded and macroblocks predicted using spatial prediction are called intra-encoded. The type of prediction for a video frame can be set by the user or selected by the video encoder so as to achieve a possibly high compression gain. In accordance with the selected type of prediction, an intra/inter switch 175 provides corresponding prediction signal to the subtractor 105. The prediction signal using temporal prediction is derived from the previously encoded images, which are stored in a memory 140. The prediction signal using spatial prediction is derived from the values of boundary pixels in the neighboring blocks, which have been previously encoded, decoded, and stored in the memory 140. The memory unit 140 thus operates as a delay unit that allows a comparison between current signal values to be encoded and the prediction signal values generated from previous signal values. The memory 140 can store a plurality of previously encoded video frames. The difference between the input signal and the prediction signal, denoted prediction error or residual, is transformed resulting in coefficients, which are quantized 110. Entropy encoder 190 is then applied to the quantized coefficients in order to further reduce the amount of data in a lossless way. This is mainly achieved by applying a code with code words of variable length wherein the length of a code word is chosen based on the probability of occurrence thereof.

Intra-encoded images (called also I-type images or I frames) consist solely of macroblocks that are intra-encoded, i.e. intra-encoded images can be decoded without reference to any other previously decoded image. The intra-encoded images provide error resilience for the encoded video sequence since they refresh the video sequence from errors possibly propagated from frame to frame due to temporal prediction. Moreover, I frames enable a random access within the sequence of encoded video images. Intra-fame prediction uses a predefined set of intra-prediction modes, which basically predict the current block using the boundary pixels of the neighboring blocks already encoded. The different modes of spatial intra-prediction refer to different directions of the applied two-dimensional prediction. This allows efficient spatial intra-prediction in the case of various edge directions. The prediction signal obtained by such an intra-prediction is then subtracted from the input signal by the subtractor 105 as described above. In addition, spatial intra-prediction mode information is entropy encoded and provided together with the encoded video signal.

Within the video encoder 100, a decoding unit is incorporated for obtaining a decoded video signal. In compliance with the encoding steps, the decoding steps include inverse quantization and inverse transformation 120. The decoded prediction error signal differs from the original prediction error signal due to the quantization error, called also quantization noise. A reconstructed signal is then obtained by adding 125 the decoded prediction error signal to the prediction signal. In order to maintain the compatibility between the encoder side and the decoder side, the prediction signal is obtained based on the encoded and subsequently decoded video signal, which is known at both sides, the encoder and the decoder. Due to the quantization, quantization noise is superposed to the reconstructed video signal. Due to the block-wise coding, the superposed noise often has blocking characteristics, which result, in particular for strong quantization, in visible block boundaries in the decoded image. Such blocking artifacts have a negative effect upon human visual perception. In order to reduce these artifacts, a deblocking filter 130 is applied to every reconstructed image block. The deblocking filter is applied to the reconstructed signal, which is the sum of the prediction signal and the quantized prediction error signal. The video signal after deblocking is the decoded signal, which is generally displayed at the decoder side (if no post filtering is applied). The deblocking filter of H.264/MPEG-4 AVC has the capability of local adaptation. In the case of a high degree of blocking noise, a strong (narrow-band) low pass filter is applied, whereas for a low degree of blocking noise, a weaker (broad-band) low pass filter is applied. The strength of the low pass filter is determined by the prediction signal and by the quantized prediction error signal. Deblocking filter generally smoothes the block edges leading to an improved subjective quality of the decoded images. Moreover, since the filtered part of an image is used for the motion compensated prediction of further images, the filtering also reduces the prediction errors, and thus enables improvement of coding efficiency.

Intra-coded macroblocks are filtered before displaying, but intra prediction is carried out using the unfiltered reconstructed macroblocks.

In order to be decoded, inter-encoded images require also the previously encoded and subsequently decoded image(s). Temporal prediction may be performed uni-directionally, i.e., using only video frames ordered in time before the current frame to be encoded, or bidirectionally, i.e., using also video frames following the current frame. Uni-directional temporal prediction results in inter-encoded images called P frames; bi-directional temporal prediction results in inter-encoded images called B frames. In general, an inter-encoded image may comprise any of P-, B-, or even I-type macroblocks. An inter-encoded macroblock (P- or B- macroblock) is predicted by employing motion compensated prediction 160. First, a best-matching block is found for the current block within the previously encoded and decoded video frames by a motion estimator 165. The best-matching block then becomes a prediction signal and the relative displacement (motion) between the current block and its best match is then signalized as motion data in the form of three-dimensional motion vectors within the side information provided together with the encoded video data. The three dimensions consist of two spatial dimensions and one temporal dimension. In order to optimize the prediction accuracy, motion vectors may be determined with a spatial sub-pixel resolution e.g. half pixel or quarter pixel resolution. A motion vector with spatial sub-pixel resolution may point to a spatial position within an already decoded frame where no real pixel value is available, i.e. a sub-pixel position. Hence, spatial interpolation of such pixel values is needed in order to perform motion compensated prediction. This is achieved by interpolation filter 150. According to the H.264/MPEG-4 AVC standard, a six-tap Wiener interpolation filter with fixed filter coefficients and a bilinear filter are applied in order to obtain pixel values for sub-pixel positions in vertical and horizontal directions separately.

For both, the intra- and the inter-encoding modes, the differences between the current input signal and the prediction signal are transformed and quantized by the unit 110, resulting in the quantized coefficients. Generally, an orthogonal transformation such as a two-dimensional discrete cosine transformation (DCT) or an integer version thereof is employed since it reduces the correlation of the natural video images efficiently. After the transformation, lower frequency components are usually more important for image quality then high frequency components so that more bits can be spent for coding the low frequency components than the high frequency components. In the entropy coder, the two-dimensional matrix of quantized coefficients is converted into a one-dimensional array. Typically, this conversion is performed by a so-called zig-zag scanning, which starts with the DC-coefficient in the upper left corner of the two-dimensional array and scans the two-dimensional array in a predetermined sequence ending with an AC coefficient in the lower right corner. As the energy is typically concentrated in the left upper part of the , two-dimensional matrix of coefficients, corresponding to the lower frequencies, the zig-zag scanning results in an array where usually the last values are zero. This allows for efficient encoding using run-length codes as a part of/before the actual entropy coding.

H.264/MPEG-4 AVC employs scalar quantization 110, which can be controlled by a quantization parameter (QP) and a customizable quantization matrix (QM). One of 52 quantizers is selected for each macroblock by the quantization parameter. In addition, quantization matrix is specifically designed to keep certain frequencies in the source to avoid losing image quality. Quantization matrix in H.264/MPEG-4 AVC can be adapted to the video sequence and signalized together with the video data.

The H.264/MPEG-4 AVC includes two functional layers, a Video Coding Layer (VCL) and a Network Abstraction Layer (NAL). The VCL provides the encoding functionality as briefly described above. The NAL encapsulates the encoded prediction error signal together with the side information necessary for the decoding of video into standardized units called NAL units according to their further application such as transmission over a channel or storing in storage. There are VCL NAL units containing the compressed video data and the related information, as well as non-VCL units encapsulating additional data such as parameter set relating to an entire video sequence, or recently added Supplemental Enhancement Information (SEI) providing additional information that can be use to improve the decoding performance.

In order to improve the image quality, a so-called post filter 280 may be applied at the decoder side 200. The H.264/MPEG-4 AVC standard allows the sending of post filter information for such a post filter via the Supplemental Enhancement Information (SEI) message. The post filter information (a so-called post filter hint) is determined at the encoder side by means of a post filter design unit 180, which compares the locally decoded signal and original input signal. In general, the post filter information is an information allowing decoder to set up an appropriate filter. It may include, for instance, directly the filter coefficients. However, it may also include another information enabling setting up the filter, such as cross-correlation information related to the uncompressed signal, such as cross-correlation information between the original input image and the decoded image or between the decoded image and the quantization noise. This cross-correlation information can be used to calculate the filter coefficients. The filter information, which is output by the post filter design unit 180 is also fed to the entropy coding unit 190 in order to be encoded and inserted into the encoded signal.

At the decoder, the filter information may be used by a post filter, which is applied on the decoded signal before displaying.

Figure 2 illustrates an example decoder 200 compliant with the H.264/MPEG-4 AVC video coding standard. The encoded video signal (input signal to the decoder) first passes to entropy decoder 290, which decodes the quantized coefficients, the information elements necessary for decoding such as motion data, mode of prediction etc., and the post filter information. The quantized coefficients are inversely scanned in order to obtain a two-dimensional matrix, which is then fed to inverse quantization and inverse transformation 220. After inverse quantization and inverse transformation, a decoded (quantized) prediction error signal is obtained, which corresponds to the differences obtained by subtracting the prediction signal from the signal input to the encoder in the case no quantization noise is introduced.

The prediction signal is obtained from either a temporal or a spatial prediction 260 and 270, respectively, which are switched 275 in accordance with a received information element signalizing the prediction applied at the encoder. The decoded information elements further include the information necessary for the prediction such as prediction type in the case of intra-prediction and motion data in the case of motion compensated prediction. Depending on the current value of the motion vector, interpolation of pixel values may be needed in order to perform the motion compensated prediction. This interpolation is performed by an interpolation filter 250. The quantized prediction error signal in the spatial domain is then added by means of an adder 225 to the prediction signal obtained either from the motion compensated prediction 260 or intra-frame prediction 270. The reconstructed image may be passed through a deblocking filter 230 and the resulting decoded signal is stored in the memory 240 to be applied for temporal or spatial prediction of the following blocks.

The post filter information is fed to a post filter 280, which sets up a post filter accordingly. The post filter is then applied to the decoded signal in order to further improve the image quality. Thus, the post filter is capable of adapting to the properties of the video signal entering the encoder.

In summary, there are three types of filter used in the latest standard H.264/MPEG-4 AVC: an interpolation filter, a deblocking filter and a post filter. In general, the suitability of a filter depends on the image to be filtered. Therefore, a filter design capable of adapting the image characteristics is advantageous. The coefficients of such a filter may be designed as Wiener filter coefficients.

Figure 3 illustrates a signal flow using a Wiener filter 300 for noise reduction. To an input signal *s*, noise *n* is added, resulting in a noisy signal *s*' to be filtered. With the goal of reducing the noise *n,* a Wiener filter is applied to the signal *s*', resulting in the filtered signal *s".* The Wiener filter 300 is designed to minimize the mean square error between the input signal *s*, which is the desired signal, and the filtered signal *s*". This means that Wiener filter coefficients *w* correspond to the solution of the optimization problem $\arg_w \min E[(s-s'')^2]$ which can be formulated as a system of linear equations called Wiener-Hopf equations, operator $E[x]$ indicating the expected value of *x.* The solution is given by:

$$w = R^{-1} \cdot p \, ,$$

where w is an *M* x 1 vector containing the optimal coefficients of Wiener filter having order *M, M* being a positive integer, $R^{-1}$ denotes the inverse of an *M* x *M* autocorrelation matrix *R* of the noisy signal *s*' to be filtered, and *p* denotes an *M* x 1 cross correlation vector between the noisy signal *s*' to be filtered and the original signal *s*. Further details on adaptive filter design can be found for example in S. Haykin, "Adaptive Filter Theory" Fourth Edition, Prentice Hall Information and System Sciences Series, Prentice Hall, 2002.

Thus, one of the advantages of the Wiener filter 300 is that the filter coefficients can be determined from the autocorrelation of the corrupted (noisy) signal and the cross correlation of the corrupted signal and the desired signal.

In video coding, quantization noise is superposed to the original (input) video signal in the quantization step. Wiener filtering in the context of video coding aims at the reduction of the superposed quantization noise in order to minimize the mean squared reconstruction error.

In general, a two dimensional filter may be separable or non-separable. A filter is said to be *separable* if it can be separated into two one-dimensional component filters: a vertical and a horizontal component filter. A significant reduction in computational complexity can be obtained for filtering if the filter can be applied as the convolution of one one-dimensional filter in the horizontal direction and one one-dimensional filter in the vertical direction instead of performing the two-dimensional convolution with the corresponding two-dimensional filter.

Filter data that is transmitted from the encoder to the decoder can either be directly the calculated filter coefficients or the cross correlation $p$ which is necessary for calculating the Wiener filter and which cannot be determined at the decoder. Some forms of the filter information to be provided for the decoder site are disclosed in *European patent application no.* 08015661.5. Transmitting such side information may improve the quality of filtering, but, on the other hand, requires additional bandwidth. Similarly, further improving the filter (for instance, by increasing its order, or by its separate determining and/or application to parts of the video signal) may even more improve the video quality. However, the requirements on bandwidth for transmitting/storing such an encoded video data including the corresponding filter information will also increase.

## SUMMARY OF THE INVENTION

The problem underlying the present invention is based on the observation that further improving the quality of video filtering is typically connected with increasing requirements of bandwidth for providing the filter information with the encoded video data.

The aim of the present invention is to provide efficient encoding and decoding mechanisms for encoding and decoding of video signals. In particular, the present invention aims at providing local adaption of the filter used at encoding and decoding and, at the same time, reducing the rate necessary for performing the filter adaption as much as possible.

This is achieved by the features as set forth in the independent claims.

Preferred embodiments are the subject matter of the dependent claims.

It is the particular approach of the present invention to maintain at the encoder and at the decoder a filter memory for storing a filter data with an index value, the filter data relating to a one-dimensional component of a two-dimensional separable filter, and to select from the filter memory at the encoder the filter data for a first and a second filter component and providing instead of the filter data the respective two indexes to the decoder.

Such an approach provides an efficient encoding of the video signal enabling local adaption by means of signalling the separate indexes, which require less bandwidth than the entire filter data. On the other side, the filter data available for the selection are updated and thus, the component indexes are selected from a limited but accurate filter data.

According to an aspect of the present invention, a method for encoding a video signal and providing the encoded video signal in form of a bitstream together with filter information to be used for filtering of the video signal at the decoder site. The method determines the filter information for a first or a second component of a two-dimensional separable filter based on a filter-design image area in the video signal. The determined filter information is provided after the determination with the bitstream of the encoded video signal to the decoder site. The determined filter information (for a first or a second filter component) is associated with an index value and stored together with the index value in a filter memory. For filtering a filter-application image area in the video signal, filter information of a first component and filter information of a second component of a two-dimensional separable filter is selected from the filter memory and a first index value and a second index value corresponding to the selected first and second component filter information are obtained. The obtained index values are then provided with the bitstream of the encoded video signal.

According to another aspect of the present invention, a method for decoding a video signal encoded in form of a bitstream together with filter data for filtering of the video signal is provided. The filter data are extracted from the bitstream of the encoded video signal and assigned an index value. The filter data together with the index value are stored the index value in a filter memory. A first index and a second index are extracted from the bitstream. Based thereon, filter data is retrieved from the filter memory. A two-dimensional separable filter is set-up based on the obtained filter data of a first component and filter data of a second component and a filter-application image area in the video signal is filtered therewith.

According to still another aspect of the present invention, an encoder for encoding a video signal and providing the encoded video signal in form of a bitstream together with filter data for filtering of the video signal is provided. The encoder includes a filter calculator for determining filter data of a first or a second component of a two-dimensional separable filter based on a filter-design image area in the video signal, wherein the determined filter data after determination are provided with the bitstream of the encoded video signal to the decoder site. The encoder further includes an index generator for assigning an index value to the determined filter data and a filter memory for storing the index value together with the associated filter data. A filter selector selects from the filter memory filter data of a first component and filter data of a second component of a two-dimensional separable filter for filtering a filter-application image area in the video signal and obtaining the associated first index value and second index value. The obtained index values are provided with the bitstream of the encoded video signal.

According to still another aspect of the present invention, a decoder for decoding a video signal encoded in form of a bitstream together with filter data for filtering of the video signal is provided. The decoder comprises a first extractor for obtaining filter data from the bitstream of the encoded video signal. The decoder further comprises an index generator for assigning an index value to the extracted filter data and a filter memory for storing the index value together with the associated filter data. The decoder also comprises a second extractor for obtaining a first index and a second index from the bitstream and a filter selector for retrieving from the filter memory filter data of a first component associated with the first index and filter data of a second component associated with the second index. A filter set-up unit sets up a two-dimensional separable filter based on the obtained filter data of a first component and filter data of a second component and a filter-application image area in the video signal is filtered with the set-up filter.

The component filter data from the filter memory for the filter-application image area, being positioned within a current filter-design image area, are preferably selected, which have been provided for filter-design image areas preceding the current filter-design image area. This provides the advantage of a single encoding of the filter-design area and reduces thus the complexity. However, the filter data of the same filter-design area may be stored in the filter memory and made available for the selection of the filter data for filtering the filter-application area included within the filter-design area. This may improve the quality of the filtering and thus increase the coding efficiency.

Preferably, the filter data comprises filter coefficients, and the values of the first and the second index provided within the bitstream for a current block are encoded based on a prediction using the values of the first or the second indexes of a block adjacent to the current block. Predictive encoding exploits the correlation between the filter data of the neighbouring blocks and provides an efficient means for reducing the bandwidth necessary for storing/transmitting the indexes. The second index provided within the bitstream for a current block may also be encoded based on a prediction using the value of the first index of the current block. This exploits the correlation between the components of the two-dimensional separable filter and leads to a reduction of the bit rate.

In accordance with an embodiment of the present invention, the filter-application image area is an image block and the filter data is provided for each slice within the slice header.

Preferably, the index generation assigns to the determined filter data an index value proportional to the time of storing the determined filter data in the filter memory. In this way, the smallest or the largest index in a filter table stored in the filter memory is always the most recent filter data and the index increases or decreases for the less recent filter data. In particular, index values may be assigned in the displaying order or in the coding order of the filter-design areas, for which the component filter data are determined. The coding order and the displaying order may differ especially for B frames. In general, it is an advantage if the index value in the table is proportional to the value of correlation between the filter data for the currently coded area and the stored filter data. It is assumed, that image areas closer in time and space (and therefore also the filter data suitable for their filtering) are more correlated than more distant image area. However, other orderings or even an explicit signalling of the index assignment may also be used with the present invention. It is important that the encoder and the decoder keeps the same assignments between indexes and filter data. It is also possible to switch between several orderings. This switching can be done based on transmitted information.

Preferably, the video signal is encoded and/or decoded based on the H.264/MPEG-4 AVC standard and the filter data is provided within the Supplemental Enhancement Information message. However, the present invention is not limited to H.264/MPEG-4 AVC and its enhancements and followers, and may be used for any video encoding mechanism, standardized or proprietary.

In accordance with another aspect of the present invention, a computer program product comprising a computer-readable medium having a computer-readable program code embodied thereon is provided, the program code being adapted to carry out the present invention.

In accordance with yet another aspect of the present invention, a system for transferring a video signal from an encoder side to a decoder side is provided, comprising an encoder as described above, a channel for storing or transmitting the encoded video signal, and a decoder as described above. In accordance with an embodiment of the present invention, the channel corresponds to the storing medium, for instance, a volatile or a non-volatile memory, an optic or a magnetic storing medium such as CD, DVD, BD or a hard disc, a Flash memory or any other storing means. In another embodiment of the present invention, the channel is a transmission medium, which can be formed by resources of a wireless or a wired system, or any combination of both in accordance with any standardized or proprietary transmission technology/system such as Internet, WLAN, UMTS, ISDN, xDSL, etc.

Preferably, more filter data is provided for one of the two components of a two dimensional separable filter from the encoder site to the decoder site. In particular, the two filter components are a horizontal and vertical component wherein more filter data is provided for the horizontal component than the vertical component to the decoder site. In this manner, the amount of data to be transmitted can be reduced and the image quality of the decoded image data improved.

The above and other objects and features of the present invention will become more apparent from the following description and preferred embodiments given in conjunction with the accompanying drawings in which:

| | |
|---|---|
| Figure 1 | is a block diagram of a conventional H.264/MPEG-4 AVC video encoder; |
| Figure 2 | is a block diagram of a conventional H.264/MPEG-4 AVC video decoder; |
| Figure 3 | is a schematic drawing illustrating a transmission system including a Wiener filter; |
| Figure 4 | is a flow diagram of an example slice encoding method with filter data updating after slice encoding; |
| Figure 5 | is a flow diagram of an example slice decoding method with filter data updating after slice decoding; |
| Figure 6 | is a flow diagram of an example slice encoding method with filter data updating before slice encoding; |
| Figure 7 | is a flow diagram of an example slice decoding method with filter data updating before slice decoding; |
| Figure 8A | is a flow diagram of an example video sequence encoding method with cumulative filter data update; |
| Figure 8B | is a flow diagram of an example slice encoding method for the example video encoding method of Fig. 8A; |
| Figure 9A | is a flow diagram of an example video decoding method with cumulative filter data update; |
| Figure 9B | is a flow diagram of an example slice decoding method for the example video encoding method of Fig. 9A; |
| Figure 10 | is an illustration of an example table in a filter memory storing the assignment of index and filter data; |
| Figure 11 | is a block diagram of an example video encoder with an adaptive interpolation filter; |
| Figure 12 | is a block diagram of an example video decoder with an adaptive interpolation filter; |
| Figure 13 | is a block diagram of an example filter design unit at the encoder in accordance with the present invention; |
| Figure 14 | is a block diagram of an example filter design unit at the decoder in accordance with the present invention; |
| Figure 15 | is a schematic drawing illustrating the vertical and the horizontal filtering; |
| Figure 16 | is a schematic drawing of a system with an encoder and a decoder in accordance with the present invention; |
| Figure 17 | is an illustration of a recording medium for storing a program realizing any of the embodiments of the present invention by means of a computer system; |
| Figure 18 | is a block diagram showing an overall configuration of a content supply system for realizing content distribution service; |
| Figure 19 | is a diagram showing a cell phone using the picture coding approach of the present invention; |
| Figure 20 | is a block diagram explaining the cell phone illustrated in Figure 19; and |
| Figure 21 | is illustrating a digital broadcasting system for incorporating the coding and decoding approach of the present invnention. |

DETAILED DESCRIPTION

The video signal encoding according to the present invention includes calculating of the filter data, the filter data being used to set up a filter at the decoder site and to filter the video signal during or after the decoding. These filter data are provided from the encoder site to the decoder site in a bitstream together with the encoded video signal. The encoder site denotes the site where the original video signal to be encoded is available. The encoder site may also include a decoder. The decoder site denotes the site where the original video signal is not available. The filter data are, for instance, the filter coefficients. For filtering images, two-dimensional filters are used. A two-dimensional separable filter may be split to a first-component filter and to a second-component filter (e.g. horizontal and vertical filter). The component filters are one-dimensional. Instead of performing a two-dimensional convolution with the two-dimensional filter, filtering with a first-component filter may be performed and the so filtered signal is then filtered with the second-component filter. This reduces the complexity by reducing the computational expense as well as the required memory size. The performance of the video decoding increases if the filter coefficients are adapted to the signal to be filtered. Since the characteristics of a video sequence change in spatial and temporal domain (typically the change is smooth), the filter coefficients are preferably adapted. Adapting of coefficients signifies their (re)calculation based on different image areas of the video signal, preferably the more recent image areas in order to reflect the changing signal characteristics. The choice of the area, for which the coefficients are calculated provided, is a trade-off between the quality (increasing with adaption to the smaller image areas) on the one side and the complexity and data rate necessary for providing the coefficient values on the other side. The filter coefficients have to be embedded into the bitstream. Thus, the existing bitstream structures such as sequence headers, frame headers, slice headers, macroblock headers, or specialized messages are preferably used to embed the filter data.

The present invention performs the adaption in two phases. The first phase is calculating the filter coefficients for the first and/or the second one-dimensional filter component based on a first image area (filter-design image area). The filter coefficients are provided to the decoder site as described above. In addition, the calculated filter coefficients are stored at the encoder site and after having been received also at the decoder site. Both, encoder and decoder site have a filter memory, where these filter data are stored in relation with a unique index, which is either provided together with the filter data or generated locally in the same way at both sites. In the second phase, filter coefficients of the first and the second one-dimensional filter component are selected only among the filter coefficients stored in the filter memory. Instead of providing to the decoder site the selected coefficients of the first-component filter, only a first index value related in the filter memory with the selected coefficients, is provided. Similarly, a second index value is provided representing the filter coefficients selected for the second component-filter. Since both the encoder and the decoder site maintain the same content of the filter memory, the decoder site is capable of unambiguously retrieve the filter coefficients associated with the indexes parsed from the bitstream to be decoded. It is an advantage of such a separable adaptive filter scheme that the indexes of the two component filters can be determined separately, this provides more flexibility and choice for the component filters. With a single index denoting each combination of vertical and horizontal filter, the memory requirements increase and the coding efficiency of encoding indexes decreases (since there is more possible values and thus, longer codewords are to be used). The component filters may be stored either in a common table or in separate tables, one for each component. The common storing is beneficial if the vertical and horizontal filter coefficients are similar. A common storing requires less storage capacity. Separated component tables provide advantages if the vertical and horizontal filters differ significantly. In such cases, each table may contain different filters and each table has less entries, i.e., less codewords are possible resulting in higher coding efficiency.

In this second phase, the filter components may be selected for the image areas of the same size and/or type as the filter-design image area. Such image area is, for instance, a slice or a frame. For a first slice, filter coefficients are determined, coded and transmitted. For the next *n* slices following the first slide, indexes are sent referencing the transmitted filter coefficients of the first slice. The same is applicable to frames, macroblocks, or even to different structured such as image areas chosen based on object segmentation, etc.

Alternatively, the filter components may be selected for the image areas (filter-application image area) smaller than the filter-design image area. For instance, the filter coefficients are calculated per frame and the second phase of selecting the filter is performed for each macroblock or block of the video signal. This provides a good tradeoff between the rate necessary for encoding the filter coefficients and the local adaptation. However, the filter-application image area may also be larger than the filter-design area.

The above described mechanism may be applied to an arbitrary interpolation, loop- or post filter employed at the decoder and possibly also at the encoder site (for instance, in the local decoder). The filtering may be applied to the video signal at different stages of the video coding such as prediction signal, prediction error signal, reconstructed video signal, etc.

Figures 4 and 5 illustrate an encoding and decoding method, respectively, in accordance with an embodiment of the present invention. In this embodiment, the filter data is calculated per slice and provided within the respective slice header. Indices for blocks in a slice are selected from a filter memory storing filter data calculated for previous slices. Thus, the update of the filter memory is performed after encoding or decoding the current slice. This enables the encoding of a slice, and herein especially the motion estimation, in a single pass.

Figure 4 shows the method S400 for a block-wise encoding of a slice at an encoder site. The blocks to be encoded may be macroblocks or blocks of various sizes as described, for instance, with reference to H.264/MPEG-4 AVC encoder and decoder in Figures 1 and 2, respectively. If the adaptive filter to be selected is the interpolation filter, subdivision of the slice to blocks corresponding to blocks used for motion estimation is preferably used. As a first step S411, the first image block of the slice is taken. For this image block, a first-component filter data is selected in step S412 from a filter data memory and the first index value associated with the selected first-component filter data is then provided within the encoded bitstream instead of providing the entire first-component filter data. Similarly, a second-component filter data is selected in step S413 from the filter data memory and the second index value associated with the selected second-component filter data is then provided within the encoded bitstream.

The selection S412 and S413 of the first-component and the second-component filter data is preferably performed in order to minimize the distortion after the filtering in both dimensions. For instance, each possible combination of the first-component and the second-component filter data is used to set-up a filter, the filter is applied to the current image block (fetched from the slice in step S411), and finally the combination is selected, which provides the lowest distortion with respect to the uncoded (original) input video signal. It is also possible to select the combination which results in the lowest Lagrangian costs of bit rate and reconstruction error. These selection schemes require exhaustive testing of combinations. Such an exhaustive testing may be reduced by pre-selection of the candidate filters, for instance, based on the characteristic of the block to be filtered (i.e., edges/smooth/texture, quantized filter coefficients, etc.).

After determining the indices of the filter, the current image block is encoded in step S415. The encoding here refers to obtaining the bitstream. In particular, the block may be encoded in one of the coding modes of H.264/MPEG-4 AVC, using CAVLC or CABAC.

If the slice includes further blocks, the next block is taken in step S411 and for this block, the steps S412, S413 and S415 of determining the first and second index value and encoding the block are performed similarly as described above for the first block. Repeatedly, these steps are performed for each block in the slice.

The indexes determined for the blocks are signalized as a part of the bitstream of encoded video signal to the decoder site. They may be positioned within the data related to the particular blocks or signalized all together within the slice header, or even dent using a separate message such as an SEI message in H.264/MPEG-4 AVC.

After all blocks of the slice have been encoded S420, filter data are determined in step S430 based on the encoded slice and the original slice. The filter data in this context is data used for setting-up a two-dimensional separable filter for filtering a video signal in spatial or in frequency domain. Thus, the filter data for setting-up the two-dimensional separable filter have two component filter data for specifying the respective one-dimensional filter components.

The filter data determining may be performed, for instance, using a Wiener filter as described above with reference to Figure 3. However, the filter data for the purpose of the present invention may also be determined by designing a filter based on the video signal using any other filter design method. The filter data may include filter coefficients. Alternatively, the filter data may include information necessary for calculating the filter coefficients at the decoder site. At the decoder site, the original input video signal is unknown and the only input is assumed to be the encoded bitstream. Therefore, the filter data preferably comprises information related to the original video signal input to the encoder. Examples of filter data and the employment thereof for setting-up a filter at the decoder side are disclosed in European patent application no. 08015661.5. In particular, the information related to the original video signal may be, for instance, the cross-correlation between the original signal and the video signal after encoding and reconstruction. The distortion of video signal resulting from video encoding is mostly caused by the quantization and the difference between the original video signal and the encoded video signal is called quantization noise. Autocorrelation of the quantization noise may also be provided as the filter data. The cross-correlation or the quantization noise may be used at the decoder site to solve the Wiener filter equations. The autocorrelation matrix of the decoded (reconstructed) video signal may be determined at the decoder site.

In step S440, a unique index value is assigned to each determined component (one-dimensional) filter data which is to be stored. The component filter data together with the corresponding index are then stored in a filter memory. Preferably, the storing of the component filter data associated with the index is performed in the same way at the encoder site and at the decoder site. This provides the advantage of automatic and implicit indexing which does not require encoding of the index together with the filter data into the bitstream. However, the pairs of values (index, component filter data) may also be signalized explicitly.

An example of storing the determined component filter data is shown in Figure 10. For this example it is assumed that the filter data include values of six filter coefficients $c_1$, $c_2$, $c_3$, $c_4$, $c_5$, and $c_6$. The values of the six filter coefficients determined for a particular slice are stored in one row of a table 1000 together with an automatically assigned index with value between 0 and $N$. Table 1000 in this example thus lists $N$+1 such rows of filter coefficients.

Preferably, table 1000 is a common table for storing component filter data of the first-component filter data and the second-component filter data. For instance, if a vertical and a horizontal component of the two-dimensional separable filter is determined for the slice and both are to be stored, the coefficients of the horizontal filter (first-component filter data) are assigned an index value and stored in a row of the table 1000, and the coefficients of the vertical filter (second-component filter data) are assigned another index value and stored in another row of the table 1000. The common storage for the first-component filter data and the second-component filter data has the advantage of reducing the memory requirements, since each component filter data is only stored once.

However, a table similar to table 1000 may be provided separately for storing the first-component filter data and another such table may be provided for storing the second-component filter data. In such case, the index values are generated independently and separately for each table. The two tables may also contain the same component filter data values, for example, the same filter coefficients.

The generating and the assigning of the index in step S440 may be performed in various ways. The rows of each component filter data of last *M* slices may be stored indexed in the ascending or descending order of their determination time. For instance, the row with index value 0 includes the filter coefficients of a predefined default filter, which is not necessarily obtained based on the video signal to be encoded. The row with index value 1 includes the filter coefficients obtained for the vertical filter component for the last encoded slice and the row with index value 2 includes the filter coefficients obtained for the horizontal filter component for the last encoded slice. Similarly, the rows with index 3 and 4 include the vertical and the horizontal filter coefficients, respectively, calculated for the slice encoded immediately before the last encoded slice, etc. In this configuration, the index value assigned to the same filter data in the table changes with each newly stored filter data. The table has preferably a limited size of *N*+1 rows, wherein only the last N component filter data are stored. Alternatively, the index assigning may be performed in the order of storing the new component filter data and in a ring, i.e., once the table is full, the oldest filter data is overwritten.

The codeword table for encoding the component indexes may also be (re)generated and ordered at the encoder and the decoder in the same way according to probability of occurrence. This allows for a simple derivation of variable length codewords for coding the indexes. In particular, integer (universal) codes may be used such as Elias, Golomb, exp-Golomb, etc.

Alternatively, together with the transmission of each filter data component, the information may be transmitted, if the filter data is to be stored and at which position in the table the filter data is to be stored. All already stored filter data at this and behind this position could then be shifted in order to empty the table row at this position. The shifted filter information at the last table entry could be discarded since it does no longer fits in the table of a limited size.

As soon as the table is full, the least used filter data may be replaced by the new filter data. Alternatively, as soon as the table is full, the filter data most similar to other filter data stored in the table may be discarded and the new filter data may be stored at the free position.

Additionally, the vector of filter coefficients to be stored may first be compared to the vectors of filter coefficients stored in the rows of the table and may then be stored under a unique index value only if this vector differs from all stored filter coefficient vectors.

Preferably, the table 1000 only stores a small number of component filter data rows, i.e. between 2 to 8. This has the advantage of reducing the complexity for selecting out of the table the combination of the two filter components with the best performance for the given image block and the advantage of keeping the signalling overhead caused by providing the filter indexes for each image block reasonable. However, the more filters are available for selecting, the better adaptation of filtering to the local characteristics of the image can be achieved. Thus, especially for applications where the encoding process may be performed slowly, larger table sizes may be beneficial.

At the beginning of the video sequence encoding, the table may contain a row with a default component filter data. It is also possible that several rows with default component filter data is in the table. However, the first slice may also be encoded after determining the best filter therefore. Other slices may then be decoded as described above, selecting one of the filter data determined for the previous slices.

In step S450 the component filter data (of at least one of the two components) are added to a slice header and embedded into the bitstream of the encoded video data. The filter data may be encoded, for instance by using a predictive coding and/or by using a variable length coding such as Huffmann, arithmetic, or any integer (universal) coding.

The coefficients (or in general filter data) of filter components that are determined in the current frame/slice may also be differentially coded by using already transmitted filter data components as a predictor. In such a case, the indexes are transmitted for specifying the predictors used for coding of the filter coefficients of the two current filter components.

Figure 5 illustrates an example method for decoding S500 performed at the decoder site of a slice encoded according to the method S400 described above with reference to Figure 4. A slice header is parsed S510 from the bitstream of the encoded video signal. From the slice header, component filter data are extracted and buffered S520 at the decoder site. The slice is block-wise decoded as described in the following. Data of a first block is obtained from the bitstream and decoded. In steps S532 and S533 a first and a second index are obtained from the bitstream. A first-component filter data and a second-component filter data associated with the first and the second index, respectively, are loaded from the filter memory. Based on these two component filter data, the two components of a two-dimensional separable filter for filtering of the first block are set-up S534 and the filter is applied S535 to the first block. If there are more block in the slice, the above described block decoding process is repeated for each block of the slice. After the end of slice is achieved ("yes" in step S540) the filter data together with the associated index buffered in step S520 are stored in the filter memory.

The two indexes signalized to the decoder site, and identifying in the table(s) 1000 the component filter data of the respective first and second filter component, are preferably encoded.

Each index may be coded independently from all other indexes using an fixed or variable length code. This way of encoding is robust against errors and simple to perform. However, the indexes of the temporally or spatially neighbouring blocks are likely to be correlated. Therefore, preferably the indexes are encoded in a way enabling to exploit this correlation, for instance by using a predictive coding.
in the following, an example syntax of the bitstream for providing the indexes, wherein the two components are not only determined, but also encoded independently is shown.

```
slice_header() {
...
  if(apply_SAIF)
  {
    Coefficient_table_size_minus1
  }
...
}
```

```
macroblock_layer() {
...
  if(Coefficient_table_size_minus1 > 0)
  {
    most_probable_filter_component1
    if(most_probable_filter_component1!=1)
    {
      filter_index_1
    }
    most_probable_filter_component2
    if(most_probable_filter_component2!=1)
    {
      filter_index_2
    }
  }
...
}
```

Syntax element **Coefficient_table_size_minus1** is provided within the silce header and denotes the maximum index value of the filter table stored and regularly updated in the filter memory of both encoder and decoder. If this syntax element is zero, no filter data are stored in the filter memory. A default filter coefficients may be used in such case, independent of the filtered data. Otherwise, each current filter component indexes I_cur1 and I_cur2 is predicted, i.e., its value is estimated by the predicted index values I_cur1_prediction and I_cur2_prediction, respectively. If I_cur1_prediction is equal to I_cur1, a syntax element **most_probable_filter_component1** is set to 1, otherwise to 0.

Preferably, the prediction of the current index value I_cur1 or I_cur2 is performed based on the values of indexes determined for the neighbouring and already encoded (at the encoder site) or decoded (at the decoder site) blocks. The indexes I_top1 and I_top2 denote the index of the first and the second component filters selected for the block adjacent to and on the top of the current block. Indexes I_left1 and I_left2 denote the index of the first and second component of the block left to the current block. There are several possibilities to determine the prediction of a component index.

The prediction I_cur1_prediction of the first (and also of the second) index of the current block may be an arbitrary function F of the indexes selected for the blocks on the top and on the left of the current block:

$$I_cur1_prediction=F(I_top1, I_left1, I_top2, I_left2).$$

An example of function F allowing for a simple prediction is selecting of the minimum value of the indexes I_top1, I_left1, I_top2, I_left2:

$$F=min(I_top1, I_left1, I_top2, I_left2).$$

Such prediction is efficient in particular, if the probability of the use of a filter decreases with an increasing index in the table. This is the case, if the filter data in the table 1000 are ordered in accordance with the time of their determination, the last determined index being always the first index, the index determined before, being the second index, etc. The minimum function may also be applied only to the same components of the neighbouring blocks: F=min(I_top1, I_left1), or to an arbitrary other subset of I_top1, I_left1, I_top2, I_left2, for instance F=min(I_top1, I_top2), etc.

Similarly, if the probability of the use of a filter increases with an increasing index, the maximum function will be advantageous:

$$F=max(I_top1, I_left1, I_top2, I_left2).$$

This is the case, for instance, if the newly determined filter data are assigned the next higher index. Again, the function F may be applied to subsets of the indexes such as: F=max(I_top1, I_left1), or F= I_top1, or F= I_left1, etc.

The prediction function may even take a constant value such as F=0, F=1, ..., **F=Coefficient_table_size_minus1.**

However, function F may be also different from the minimum or maximum. Functions such as an average, a weighted average, or any other functions are applicable for the present invention and may be determined in accordance with the characteristics of the video signal to be encoded.

Alternatively, the function F(I_top1, I_left1, I_top2, I_left2) may be defined as a complete table, comprising the most probable index for each combination of I_top1, I_left1, I_top2, and I_left2. Again, the table may also be defined for a subset, for example, of I_top1 and I_left1. Such a prediction table may be fixed. A fixed prediction table may be obtained, for instance by evaluating a test set and measuring the correlation/differences between the indexes I_top1, I_left1, I_top2, I_left2. However, the prediction table can be also adaptive, measured for parts of a video sequence such as GoP (Group of Pictures), frame, slice, etc., and transmitted as header information (forward adaptation). Alternatively, the prediction table may be measured during the en-/decoding of the part of the video sequence and adapted to the statistics (backward adaptation).

Even if the above examples focus on using the top and the left blocks neigbouring with the current block, the present invention is not limited thereto. Other already en-/decoded (spatially and temporally) neighboring blocks could also be considered. Temporally neighboring blocks could be the ones following the motion trajectory (P-Frames) or trajectories (B-Frames) determined using motion estimation.

In the case the index I_curA1 of the current block does not equal its prediction I_cur1_prediction, the syntax element **most_probable_filter_component1** is set to 0 and the syntax element **filter_index_1** is provided. In such case, codewords are assigned to all possible indexes of table 1000, except the one used as the prediction (I_cur1_prediction). This can be done e.g. based on a fixed codeword table of a fixed length or a variable length code, such as Huffman code, the codeword table having **coefficient_table_size_minus1** entries. The codeword table may be regularly updated, for instance, by adapting it to the probability of the occurrence of the index values. The update may be performed once per frame, or slice, or GoP, etc. or even irregularly, triggered by the changing probability of the index values. Update the code words for the coding of the indices enables further increasing of the coding efficiency (similar to the update of the code in the case of the reference frame index in H.264). Information about the code word update is provided from the encoder site to the decoder site, i.e., embedded within the bitstream. The binary symbols of the codeword table may also be encoded arithmetically. For this purpose, CABAC may be used.

The prediction and encoding of the first index I_cur1_prediction of the current block and the prediction and encoding of the second index I_cur2_prediction of the current block may be performed in similar ways as shown above. The function F may differ for the first and for the second index. For instance, the first index may be determined based on the first indexes of the neighbouring blocks only and second index may be determined based on the second indexes of the neighbouring blocks only. Similarly to the first index, if I_cur2_prediction==I_cur2, the syntax element **most_probable_filter_component2** is set to 1, otherwise to 0.

The prediction I_cur2_prediction of the second index of the current block may be determined using also the value of the first index. The simplest case, which is efficient if the vertical and the horizontal filter components are correlated, is the prediction I_cur2_prediction = I_cur1. However, other combinations may provide advantages by exploiting both the correlation of the indexes of the neighbouring blocks and the correlation between the two current component indexes:

$$I_cur2_prediction = F(I_top1, I_left1, I_top2, I_left2, I_cur1).$$

Again, function F is an arbitrary function. It may be a minimum or a maximum function depending on the way of generating the indexes for storing the filter data in the filter memory: F=min(I_top1, I_left1, I_top2, I_left2, I_cur1) or F=max(I_top1, I_left1, 1_top2, I_left2, I_cur1). The function may be calculated based only on a subset of indexes I_top1, I_left1, I_top2, I_left2, I_cur1, such as F=min(I_top2, I_left2, I_cur1), or F=min(I_top2, I_cur1), or F=max(I_top2, I_left2, I_cur1), or F= I_top2, or F= I_left2, or constant value functions F=0; F=1;... ;F=**Coefficient_table_size_minus2;**

Alternatively, the function F may be simply calculated as follows:

$$F=\min(\textbf{Coefficient_table_size_minus1}, \max(0, I_cur1+1)).$$

Such a function F is simple and may be efficient if the second component is always stored after the first component.

If the second component is stored before the first component, the following function may provide a simple and efficient way of predicting:

$$F=(\textbf{Coefficient_table_size_minus1}, \max(0, I_cur1-1)).$$

Again, the function F may also be defined as a prediction table comprising the most probable index for each combination of I_top1, I_left1, I_top2, I_left2 and I_cur1 or their subset.

In the case the index I_cur2 of the current block does not equal its prediction I_cur2_prediction, the syntax element **most_probable_filter_component2** is set to 0 and the syntax element **filter_index_2** is provided. The syntax element **filter_index_2** may be encoded similarly as **filter_index_1**.

The indexes of the two filter components may also be coded jointly. In this case, an individual code word is assigned to each possible pair of the first and the second index. In addition, a temporal prediction of the index pairs from previously coded index pairs may be advantageous for reducing the amount of data to be transmitted.

In this case, all possible vectors of (I_cur1, I_cur2) are represented by new symbols, which are then coded. This coding method may be beneficial for rather small filter fables 1000, i.e., if **Coefficient_table_size_minus1** is quite small and thus also the number of possible vectors and thus the code book, is reduced.

An example syntax for jontly encoding the two indexes I_cur1 and I_cur2 of the current block is shown below:

| |
|---|
| slice_header( ) |
| { |
| ... |
|   if(apply_SAIF) |
|   { |
|     **Coefficient_table_size_minus1** |
|   } |
| ... |

```
}
```

```
macroblock_layer() {
...
  if(Coefficient_table_size_minus1 > 0)
  {
    most_probable_filter_combination
    if(most_probable_filter_combination!=1)
    {
      filter_combination
    }
  }
...
}
```

The components I_cur1 and I_cur2 of the vector (I_cur1, I_cur2) could be predicted independently by the above described methods. This would result in a prediction vector (I_curl_prediction, I_cur2_prediction). In the case that the vector (I_cur1, I_cur2) of the current block does not equal its prediction vector (I_cur1_prediction, I_cur2_prediction), the syntax element **most_probable_filter_combination** is 0, otherwise 1.

The prediction vector (I_cur1_prediction, I_cur2_prediction) could also be set to a vector (I_neigh1, I_neigh2) of indexes of one of the neighboring blocks. Such neighbouring block is preferably selected as the neighbouring block with motion vector being most similar to the motion vector of the current block. Alternatively, the neighbouring block may be selected, the block mode of which is most similar to the block mode of the current block. Other selection possibilities may be chosen in order to implement the present invention. The prediction vector (I_cur1_prediction, I_cur2_prediction) could also be fixed, e.g., the index values of the left or to the top neighboring block.

In the case that the that the vector (I_cur1, I_cur2) of the current block does not equal its prediction vector (I_cur1_prediction, I_cur2_prediction), the syntax element **most_probable_fliter_combination** is set to 0 and the syntax element **filter_combination** is provided. In this case, codewords are assigned to all possible vectors (I_cur1, I_cur2), except for the one used as prediction (I_cur1_prediction, I_cur2_prediction). This can be done, for instance, based on a fixed codeword table of a fixed or a variable length code, the codeword table having the number of entries:

$$(\textbf{Coefficient_table_size_minus1}+1)^{*}\ (\textbf{Coefficient_table_size_minus1}+1)-1.$$

Another possibility of predictive coding is the prediction derived by generating prediction signals based on the filter components rather than on the index values themselves.

Still another possibility for obtaining the prediction of the current component index value(s) is to use the filter data. In particular, a video signal of the current block may be reconstructed by using each of the filter data listed in the filter memory. For the reconstruction, different prediction image signals are generated by using all possible filters, and the quantized prediction error is added to the generated prediction signals. Then, a distortion measure is calculated between the border pixels of the reconstructed signals (corresponding to the current block reconstructed using different filters) and the neighboring reconstructed signal (neighbouring block). The distortion may be, for instance, a sum of absolute or squared differences, or any other distortion measure. Finally, The indexes leading to the lowest distortion are selected as prediction of the current indexes. Such a prediction mechanism is more complex than directly predicting indexes from indexes. However, better prediction accuracy may be achieved.

Figure 6 and 7 illustrate an encoding S600 and decoding S700 method, respectively, in accordance with another embodiment of the present invention. In this embodiment, the filter data is calculated per slice and provided within the respective slice header. Indices for blocks in a slice are selected from a filter memory storing filter data calculated for the current slice and the previous slices. Thus, the update of the filter memory is performed before encoding or decoding the current slice. This enables to use the filter information in the same slice it is transmitted with.

Figure 6 shows the slice encoding process starting with the standard encoding S610 of a slice, such as is used in any of nowadays video codecs, for instance, in H.264/MPEG-4 AVC as described above with reference to Figure 1.

In particular, the lossy compression is performed in order to obtain the reconstructed slice after encoding. Based on the encoded and reconstructed slice and the input video signal, the filter coefficients are determined S620 similarly as in the previously described embodiment, for instance by Wiener filter estimation. In the next step S630, a unique index is generated and the filter data in relation with the index are stored in the filter memory. After storing the filter data, the slice is encoded again block after block. Each block is first taken S641, a filter data from the filter memory is selected for the filtering of said block and the index of the first and the second filter component of the filter data are determined in steps S642 and S643, respectively. The image block is encoded S645 and the indexes are encoded into the bitstream and provided together with the bitstream of the encoded video at the block, macroblock, slice, or packet level. After the end of the slice in step S650, the determined filter coefficients are included into the slice header, which is attached to the encoded slice data in the last step S660.

In this example, the encoding of each block is performed twice: the first time for determining the filter data for the entire slice and the second time for selecting the filter data for each block. If the adaptive filter for filtering the blocks is a loop filter, the blocks are preferably also filtered therewith at the encoder. In case the adaptive filter is a post filter, the blocks are encoded without having been filtered by the selected filter.

Figure 7 illustrates an example decoding of the bitstream generated in accordance with the slice encoding S600 described with reference to Figure 6. At first, the slice header is parsed S710 and the filter data included therein are decoded, assigned an index generated in correspondence with generation of index at the encoder site, and stored related with the generated index S720. After storing the assignment, the blocks of the slice are decoded sequentially S731. At first, for each block the two indexes are decoded in steps S732 and S733. Based on these decoded indexes, the filter data are retrieved from the filter memory and the filter is set-up S734. The block is filtered with the set-up filter S735. Setting up the filter includes providing the filter coefficients. These may be directly retrieved from the filter memory, if they are provided within the filter data; or calculated from the filter data. After decoding all blocks in the slice ("yes" in step S740), the slice decoding ends.

The single encoding S400 described with reference to Figure 4 is less complex than the double encoding S600 described with reference to Figure 6. Thus, the single encoding S400 is advantageous, in particular, for applications requiring lower delay and/or power consumption at the encoder. On the other hand, the double encoding S600 may provide better performance, e.g. in terms of coding efficiency, depending on the changes of the local video characteristics. The double encoding enables immediate adaptation to new video content, necessary especially for rapidly changing local characteristics. However, the performance of both the single and the double encoding will likely be influenced by the choice of the slicing. If slices are chosen to contain blocks with similar characteristics, the coding efficiency as well as the quality of reconstruction will increase. It is also possible to switch between the single encoding S400 and the double encoding S600. This may be signaled, e.g. in the slice or picture header.

Figure 8 and Figure 9 illustrate an example of encoding S800 and decoding S900 of a video sequence in accordance with still another embodiment of the present invention. In particular, the filter data are not necessarily determined for each slice or frame. The generation of the filter data is rather triggered by a condition and may be sent cumulatively, i.e., more filter data vectors at once, for instance, within the same message, or slice header.

Figure 8A shows schematically encoding S800 of a video sequence. A slice is taken S810 and encoded in step S820. Details of step S820 are provided in Figure 8B. Each block of the slice is taken S821 and from the filter memory, filter data related to the first and the second component of the two-dimensional filter are selected in steps S822 and S823, and the respective first and the second index associated with the selected filter data are encoded and provided together with the encoded bitstream. The block is encoded in step S825. This encoding may, but does not need to include filtering with the selected filter. After encoding the slice ("yes" in step S826), a first condition is tested in step S830 in order to decide whether new filter data shall be determined or not. If the first condition is fulfilled, then the filter data are determined S840 based on, for instance, the last slice or several previous slices, and buffered. In step S850 a second condition is tested in order to decide if the determined filter data are to be included into the bitstream or not. If so, then the filter data is encoded and provided within the video stream S870 and the filter memory is updated S860 by storing the provided filter data in association with a unique index. If the date are not to be provided at the moment, the encoding continues with the next slice or ends S880. If the first condition is not fulfilled, it is tested in step S880, if the sequence contains more slices. If so, the processing returns to step S810, where the next slice is taken and further encoded S820. If there is no other slice, the sequence encoding ends.

The first condition in step S830 may be satisfied , for instance, each *K* slices, i.e., each K slices, the filter data is to be determined. The condition may also (or alternatively) be fulfilled if the character of the video signal changes. This may be determined, for instance by comparing with a predetermined threshold distortion after filtering using any of the filters in the filter memory. If the distortion is higher than a certain threshold, new filter data may be determined and provided. Other conditions may be chosen in order to determine the filter coefficients only if the stored filter coefficients do not provide satisfying filtered image quality.

The second condition in step S850 may correspond to the first condition, i.e., the filter coefficients are provided immediately after having been determined. However, the filter data may also be cumulated and provided with lower frequency than they are calculated.

The filter data may even be calculated for filter-design image areas smaller than the slice, more sets of filter data may be calculated and provided within the bitstream. If the filter coefficients are provided irregularly, a flag may be necessary to specify it.

Figures 9A and 9B illustrate an example of decoding S900 of a bitstream including a video sequence encoded as described with reference to Figures 8A and 8B. The header of a unit (for instance a NAL unit in H.264/MPEG-4 AVC) is parsed S910. If the unit contains new filter data S930 (it may be an SPS, PPS unit, a slice containing the filter data in header, an SEI message, etc.), the new filter data are assigned an index for each component and stored in the filter memory S940. If the unit is an VCL unit containing slice data S950, the slice is decoded S960 as shown in detail in Figure 9B. In particular, each image block is taken S961, the first index S962 and the second index S963 are decoded and the corresponding filter data are retrieved from the filter memory. According to the retrieved data, the filter is set-up in step S964 and said image block is filtered S965. After encoding the whole slice S966, another unit is parsed ("no in step S980) or the decoding ends.

It is possible to provide several filter components in a frame/slice/sequence header. A single component, two component or any number of filter data components may be provided. In order to facilitate this, a syntax element is needed to indicate the number of filter components that are transmitted.

With each filter information, it may be indicated at which position it is to be stored in the table. This is beneficial, if all filter data is estimated at the encoder site in advance and transmitted at the beginning of a sequence. Then a lot of possible filters are available already for the first frame.

Selection of the indexes I_cur1 and I_cur2 may be included in RD optimization performed at the encoder as one encoder control method.

In order to reduce the signalling overhead connected with providing the filter data, a one already transmitted filter component (horizontal or vertical) may be used and the corresponding index is provided. For the other filter component, the filter data are coded and transmitted together with the current slice. Thus, each component filter is send once per two slices. In each slice either the vertical, or the horizontal filter data component is provided, while the other component is signalized by means of an index.

Usually, horizontal motion in a natural video sequence varies more than the vertical motion. In compliance with the present invention a separate first index is provided for selecting a first component filter and separate second index is provided for selecting a second component filter. This allows further to scale the accuracy of the filter differently for the vertical and the horizontal direction. For instance, more horizontal filter information may be provided than the vertical filter information. In particular, more horizontal filters may be provided for the selection than vertical filters, resulting in separated filter tables for vertical and horizontal filter components, the filter tables having different sizes. Moreover, the filters for vertical and horizontal component may also have different order. In general, the filter table 1000 may store the filters having different orders. By distinguishing between the first and the second component filters, requirements for the encoder/decoder memory for the coefficient storage may be reduced and the coding efficiency increased (less indexes to be selected for the vertical component).

The above described approaches for reducing the number of bits to be transmitted can be applied individually or by any combination thereof, in particular by a combination of two or all of these approaches. Further, these approaches regarding the bit reduction can be employed in each of the described embodiments of the present invention.

Figure 11 illustrates an example of an encoding apparatus in accordance with the present invention. In this example, the present invention is embodied within an encoder 1100 similar to the encoder 100 described with reference to Figure 1. The filter, for which the filter data is provided in this example is the interpolation filter 1150 used in the estimation of the sub-pel motion. In addition, a filter design unit 1110 is inserted for providing filter coefficients of such a separable adaptive interpolation filter (SAIF) to the filter 1150 and for signaling the filter data and indexes encoded by an encoder 1190 and included into the bitstream. The filter coefficients may also be provided to the motion estimation unit 165 for interpolation of the block to be searched.

More signals may be used to determining the filter data such as a prediction video signal, a prediction error signal, and a reconstructed video signal for the determining of the filter data separate for filtering of these signals. Such an approach provides an improved filtering performance

Figure 12 illustrates an example of a decoding apparatus in accordance with the present invention, compatible with the encoding apparatus 1100 of Figure 11, and embodied within a decoder 1200 similar to the decoder 200 described with reference to Figure 2. In particular, a decoder 1290 parses and decodes the indexes and the filter data provided from the encoder site and provides the encoded data to a filter design unit 1210, which sets up the interpolation filter 1250 by providing it with filter coefficients.

Figure 13 shows details of the filter design unit 1110 at the encoder site. The uncompressed video signal 1301 and the video signal reconstructed after encoding 1302 are provided to a filter calculator 1310 for calculating the filter data 1392 and/or filter coefficients 1391 for filtering the encoded signal. The filter data 1392 and/or coefficients 1391 for each component are calculated preferably by solving the Wiener filter equations. However, other design methods may equally be applied. The calculated component filter data are provided to the index generator 1320 for generating a unique index therefor. The component filter data together with the unique index are stored in a filter memory 1330 either in a common table or in two separate tables for each component one. The filter data are encoded 1190 and provided together with the encoded video data bitstream. In the example of figure 11, the filter coefficients are provided to the interpolation filter 1150, which is set-up accordingly and used to filter the video signal.

The filter design unit further comprises a filter selector 1350, which also receives the uncompressed video signal 1301 and the video signal reconstructed after encoding 1302 at its input. Based on these signals, the filter selector 1350 selects two components of the filter data from the filter data indexed in the filter memory 1330. The filter selector outputs the corresponding indexes of both component filters 1395. These indexes are further encoded by the encoder 1190 and provided within the bitstream of the encoded video signal.

Figure 14 shows details of the filter design unit 1210 at the decoder site. A filter selector 1495 receives at its input the indexes of the two filter data components, retrieves from the filter memory 1430 the corresponding filter data of the two components, and provides the retrieved filter data to the filter set-up unit 1460, which outputs the filter coefficients 1491 to the filter 1250. Here, the filter data may already correspond to the filter coefficients.

Alternatively, the filter set-up unit may calculate the filter coefficients based on the filter data in case the filter data contain for instance the cross-correlation between encoded and original video signal, or autocorrelation of the noise as described above.

The filter design unit at the decoder further comprises an index generator 1420, which receives the filter data parsed from the bitstream and provided by the encoder site, and which generates for the received filter data of each component a separate index. The component filter data received and the indexes associated therewith are stored into the filter memory 1430.

The example of Figures 11 and 12 employs the present invention to improve the efficiency of the interpolation filtering. However, the present invention is not limited thereto and may be equally employed for other image filters such as post filter, deblocking filter, or another loop filter. The filter design unit may described with reference to Figures 13 and 14 may also be used or adapted to perform any of the methods described above.

Figure 15 illustrates the principle of interpolation filtering which may be performed by the above described interpolation filter 1150 and 1250. From the full-pel positions, the half-pel positions are obtained by applying an interpolation filter to the full-pel positions. For instance, the half-pel position 1501 is obtained by applying a horizontal filter to full-pel positions A1 to A6. Similarly, the half-pel positions in the same column as 1501 are interpolated. From the sub-pel positions 1501, another sub-pel positions like 1510 may be obtained by vertical filtering. In this way, all missing sub-pel positions are interpolated.

In order to improve the quality of the interpolation filtering, the filter coefficients for each sub-pel position (such as 1501) may be additionally interpreted as individual filter components. To each of these filter components, the corresponding indexes may be assigned. Thus, each filter component index signalling for a block will contain several component filter indexes, one for each sub-pel position. The coding/decoding of the indexes may be performed in the same way as described above. Since the filters for filtering of different sub-pel positions may vary significantly, it may be of advantage to provide a separated filter tables and codeword tables for different sub-pel positions.

Figure 16 illustrates a system for transferring encoded video data from an encoder site to a decoder site in accordance with the present invention. An input video signal is encoded by an encoder 1601 and provided to a channel 1602. The encoder 1601 is an encoder in accordance with any of the embodiments of the present invention as described above. The channel 1602 is either storage or any transmission channel. The storage may be, for instance, any volatile or non-volatile memory, any magnetic or optical medium, a mass-storage, etc. The transmission channel may be formed by physical resources of any transmission system, wireless or wired, fixed or mobile, such as xDSL, ISDN, WLAN, GPRS, UMTS, Internet, or any standardized or proprietary system. Apart from the encoder, the encoder site may also include preprocessing of the input video signal such as format conversion and/or transmitter for transmitting the encoded video signal over the channel 1602 or an application for transferring the encoded video signal into the storage. The encoded video signal is then obtained from the channel 1602 by a decoder 1603. The decoder 1603 is a decoder in accordance with any embodiment of the present invention as described above. The decoder decodes the encoded video signal. Apart from the decoder, the decoder side may further include a receiver for receiving the encoded video signal from a transmission channel, or an application for extracting the encoded video data from the storage, and/or post-processing means for post processing of the decoded video signal, such as format conversion.

According to a further embodiment, it is possible to easily perform the processing shown in the above embodiments in an independent computing system by recording a program for realizing the picture coding method and the picture decoding method shown in the above-mentioned embodiments onto the storage medium such as a flexible disk.

FIG. 17 is an illustration of a recording medium for storing a program for realizing any of the described embodiments by a computer system.

FIG. 17(b) shows a full appearance of a flexible disk, its structure at cross section and the flexible disk itself whereas FIG. 17(a) shows an example of a physical format of the flexible disk as a main body of a storing medium. A flexible disk FD is contained in a case F, a plurality of tracks Tr are formed concentrically from the periphery to the inside on the surface of the disk, and each track is divided into 16 sectors Se in the angular direction. Therefore, as for the flexible disk storing the above-mentioned program, data as the aforementioned program is stored in an area assigned for it on the flexible disk FD.

FIG. 17(c) shows a structure for recording and reading out the program on the flexible disk FD. When the program is recorded on the flexible disk FD, the computing system Cs writes in data as the program via a flexible disk drive. When the coding device and the decoding device are constructed in the computing system by the program on the flexible disk, the picture coding method and a picture decoding method as the program is read out from the flexible disk drive and then transferred to the computing system Cs.

The above explanation is made on an assumption that a storing medium is a flexible disk, but the same processing can also be performed using an optical disk. In addition, the storing medium is not limited to a flexible disk and an optical disk, but any other medium such as an IC card and a ROM cassette capable of recording a program can be used.

According to still another embodiment, the following is an explanation of the applications of the picture coding method as well as the picture decoding method as shown in the above-mentioned embodiments, and a system using them.

FIG. 18 is a block diagram showing an overall configuration of a content supply system ex100 for realizing content distribution service. The area for providing communication service is divided into cells of desired size, and cell sites ex107 ~-ex110which are fixed wireless stations are placed in respective cells.

This content supply system ex100 is connected to devices such as Internet ex101, an Internet service provider ex102, a telephone network ex104, as well as a computer ex111, a PDA (Personal Digital Assistant) ex112, a camera ex113, a cell phone ex114 and a cell phone with a camera ex115 via the cell sites ex107-ex110.

However, the content supply system ex100 is not limited to the configuration as shown in FIG. 18 and may be connected to a combination of any of them. Also, each device may be connected directly to the telephone network ex104, not through the cell sites ex107-ex110.

The camera ex113 is a device capable of shooting video such as a digital video camera. The cell phone ex114 may be a cell phone of any of the following system: a PDC (Personal Digital Communications) system, a CDMA (Code Division Multiple Access) system, a W-CDMA (Wideband-Code Division Multiple Access) system or a GSM (Global System for Mobile Communications) system, a PHS (Personal Handyphone System) or the like.

A streaming server ex103 is connected to the camera ex113 via the telephone network ex104 and also the cell site ex109, which realizes a live distribution or the like using the camera ex113 based on the coded data transmitted from the user. Either the camera ex113 or the server which transmits the data may code the data. Also, the picture data shot by a camera ex116 may be transmitted to the streaming server ex103 via the computer ex111. In this case, either the camera ex 116 or the computer ex111 may code the picture data. An LSI ex117 included in the computer ex111 or the camera ex116 actually performs coding processing. Software for coding and decoding pictures may be integrated into any type of storage medium (such as a CD-ROM, a flexible disk and a hard disk) that is a recording medium which is readable by the computer ex111 or the like. Furthermore, a cell phone with a camera ex115 may transmit the picture data. This picture data is the data coded by the LSI included in the cell phone ex115.

The content supply system ex100 codes contents (such as a music live video) shot by a user using the camera ex113, the camera ex116 or the like in the same way as shown in the above-mentioned embodiments and transmits them to the streaming server ex103, while the streaming server ex103 makes stream distribution of the content data to the clients at their requests.

The clients include the computer ex111, the PDA ex112, the camera ex113, the cell phone ex114 and so on capable of decoding the above-mentioned coded data. In the content supply system ex100, the clients can thus receive and reproduce the coded data, and can further receive, decode and reproduce the data in real time so as to realize personal broadcasting.

When each device in this system performs coding or decoding, the picture coding method or the picture decoding method shown in the above-mentioned embodiments can be used.

A cell phone will be explained as an example of the device.

FIG. 19 is a diagram showing the cell phone ex**115** using the picture coding method and the picture decoding method explained in the above-mentioned embodiments. The cell phone ex**115** has an antenna ex**201** for communicating with the cell site ex**110** via radio waves, a camera unit ex**203** such as a CCD camera capable of shooting moving and still pictures, a display unit ex**202** such as a liquid crystal display for displaying the data such as decoded pictures and the like shot by the camera unit ex**203** or received by the antenna ex**201**, a body unit including a set of operation keys ex**204**, a audio output unit ex**208** such as a speaker for outputting audio, a audio input unit ex**205** such as a microphone for inputting audio, a storage medium ex**207** for storing coded or decoded data such as data of moving or still pictures shot by the camera, data of received e-mails and that of moving or still pictures, and a slot unit ex**206** for attaching the storage medium ex**207** to the cell phone ex**115**. The storage medium ex**207** stores in itself a flash memory element, a kind of EEPROM (Electrically Erasable and Programmable Read Only Memory) that is a nonvolatile memory electrically erasable from and rewritable to a plastic case such as an SD card.

Next, the cell phone ex**115** will be explained with reference to FIG. 20. In the cell phone ex**115,** a main control unit ex**311**, designed in order to control overall each unit of the main body which contains the display unit ex**202**as well as the operation keys ex**204**, is connected mutually to a power supply circuit unit ex**310**, an operation input control unit ex**304**, a picture coding unit ex**312**, a camera interface unit ex**303**, an LCD (Liquid Crystal Display) control unit ex**302**, a picture decoding unit ex**309**, a multiplexing/demultiplexing unit ex**308**, a read/write unit ex**307**, a modem circuit unit ex**306**and a audio processing unit ex**305**via a synchronous bus ex**313**.

When a call-end key or a power key is turned ON by a user's operation, the power supply circuit unit ex**310** supplies respective units with power from a battery pack so as to activate the camera attached digital cell phone ex**115** as a ready state.

In the cell phone ex**115**, the audio processing unit ex**305** converts the audio signals received by the audio input unit ex**205** in conversation mode into digital audio data under the control of the main control unit ex**311** including a CPU, ROM and RAM, the modem circuit unit ex**306** performs spread spectrum processing of the digital audio data, and the communication circuit unit ex**301** performs digital-to-analog conversion and frequency conversion of the data, so as to transmit it via the antenna ex**201**. Also, in the cell phone ex**115**, the communication circuit unit ex**301** amplifies the data received by the antenna ex**201** in conversation mode and performs frequency conversion and analog-to-digital conversion to the data, the modem circuit unit ex**306** performs inverse spread spectrum processing of the data, and the audio processing unit ex**305** converts it into analog audio data, so as to output it via the audio output unit ex**208**.

Furthermore, when transmitting an e-mail in data communication mode, the text data of the e-mail inputted by operating the operation keys ex**204** of the main body is sent out to the main control unit ex**311** via the operation input control unit ex**304**. In the main control unit ex**311**, after the modem circuit unit ex**306** performs spread spectrum processing of the text data and the communication circuit unit ex**301** performs digital-to-analog conversion and frequency conversion for the text data, the data is transmitted to the cell site ex**110** via the antenna ex**201**.

When picture data is transmitted in data communication mode, the picture data shot by the camera unit ex**203** is supplied to the picture coding unit ex**312** via the camera interface unit ex**303**. When it is not transmitted, it is also possible to display the picture data shot by the camera unit ex**203** directly on the display unit ex**202** via the camera interface unit ex**303** and the LCD control unit ex**302**.

The picture coding unit ex**312**, which includes the picture coding apparatus as explained in the present invention, compresses and codes the picture data supplied from the camera unit ex**203** by the coding method used for the picture coding apparatus as shown in the above-mentioned first embodiment so as to transform it into coded picture data, and sends it out to the multiplexing/demultiplexing unit ex**308**. At this time, the cell phone ex**115** sends out the audio received by the audio input unit ex**205** during the shooting with the camera unit ex**203** to the multiplexing/demultiplexing unit ex**308** as digital audio data via the audio processing unit ex**305**.

The multiplexing/demultiplexing unit ex**308** multiplexes the coded picture data supplied from the picture coding unit ex**312** and the audio data supplied from the audio processing unit ex**305** using a predetermined method, then the modem circuit unit ex**306** performs spread spectrum processing of the multiplexed data obtained as a result of the multiplexing, and lastly the communication circuit unit ex**301** performs digital-to-analog conversion and frequency conversion of the data for the transmission via the antenna ex**201**.

As for receiving data of a moving picture file which is linked to a Web page or the like in data communication mode, the modem circuit unit ex**306** performs inverse spread spectrum processing of the data received from the cell site ex**110** via the antenna ex**201,** and sends out the multiplexed data obtained as a result of the inverse spread spectrum processing.

In order to decode the multiplexed data received via the antenna ex**201**, the multiplexing/demultiplexing unit ex**308** separates the multiplexed data into a bit stream of picture data and that of audio data, and supplies the coded picture data to the picture decoding unit ex**309** and the audio data to the audio processing unit ex**305** respectively via the synchronous bus ex**313**.

Next, the picture decoding unit ex**309**, including the picture decoding apparatus as explained in the above-mentioned invention, decodes the bit stream of picture data using the decoding method corresponding to the coding method as shown in the above-mentioned embodiments to generate reproduced moving picture data, and supplies this data to the display unit ex**202** via the LCD control unit ex**302**, and thus the picture data included in the moving picture file linked to a Web page, for instance, is displayed.

At the same time, the audio processing unit ex**305** converts the audio data into analog audio data, and supplies this data to the audio output unit ex**208**, and thus the audio data included in the moving picture file linked to a Web page, for instance, is reproduced.

The present invention is not limited to the above-mentioned system as such ground-based or satellite digital broadcasting has been in the news lately and at least either the picture coding apparatus or the picture decoding apparatus described in the above-mentioned embodiments can be incorporated into a digital broadcasting system as shown in FIG. 21. More specifically, a bit stream of video information is transmitted from a broadcast station ex409 to or communicated with a broadcast satellite ex410 via radio waves.

Upon receipt of it, the broadcast satellite ex410 transmits radio waves for broadcasting. Then, a home-use antenna ex406 with a satellite broadcast reception function receives the radio waves, and a television (receiver) ex401 or a set top box (STB) ex407 decodes the bit stream for reproduction. The picture decoding apparatus as shown in the above-mentioned embodiment can be implemented in the reproducing apparatus ex403 for reading out and decoding the bit stream recorded on a storage medium ex402 that is a recording medium such as CD and DVD. In this case, the reproduced video signals are displayed on a monitor ex404. It is also conceivable to implement the picture decoding apparatus in the set top box ex407 connected to a cable ex405 for a cable television or the antenna ex406 for satellite and/or ground-based broadcasting so as to reproduce them on a monitor ex408 of the television ex401. The picture decoding apparatus may be incorporated into the television, not in the set top box. Also, a car ex412 having an antenna ex411 can receive signals from the satellite ex410 or the cell site ex107 for reproducing moving pictures on a display device such as a car navigation system ex413 set in the car ex412.

Furthermore, the picture coding apparatus as shown in the above-mentioned embodiments can code picture signals and record them on a recording medium. As a concrete example, a recorder ex420 such as a DVD recorder for recording picture signals on a DVD disk ex421, a disk recorder for recording them on a hard disk can be cited. They can be recorded on an SD card ex422. If the recorder ex420 includes the picture decoding apparatus as shown in the above-mentioned embodiments, the picture signals recorded on the DVD disk ex421 or the SD card ex422 can be reproduced for display on the monitor ex408. As for the structure of the car navigation system ex413, the structure without the camera unit ex203, the camera interface unit ex303 and the picture coding unit ex312, out of the components shown in FIG.20, is conceivable. The same applies for the computer ex111, the television (receiver) ex401 and others.

In addition, three types of implementations can be conceived for a terminal such as the above-mentioned cell phone ex**114;** a sending/receiving terminal implemented with both a coder and a decoder, a sending terminal implemented with a coder only, and a receiving terminal implemented with a decoder only. As described above, it is possible to use the picture coding method or the picture decoding method described in the above-mentioned embodiments for any of the above-mentioned devices and systems, and by using this method, the effects described in the above-mentioned embodiments can be obtained.

Another embodiment of the invention relates to the implementation of the above described various embodiments using hardware and software. It is recognized that the various embodiments of the invention may be implemented or performed using computing devices (processors). A computing device or processor may for example be general-purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

Most of the examples have been outlined in relation to an H.264/AVC based video coding system, and the terminology mainly relates to the H.264/AVC terminology. However, this terminology and the description of the various embodiments with respect to H.264/AVC based coding is not intended to limit the principles and ideas of the invention to such systems. Also the detailed explanations of the encoding and decoding in compliance with the H.264/AVC standard are intended to better understand the exemplary embodiments described herein and should not be understood as limiting the invention to the described specific implementations of processes and functions in the video coding. Nevertheless, the improvements proposed herein may be readily applied in the video coding described. Furthermore the concept of the invention may be also readily used in the enhancements of H.264/AVC coding currently discussed by the JVT.

Summarizing, the encoding an the decoding of a video signal according to the present invention includes two phases. The first one is providing filter data determined for a first image area and storing these filter data in a filter memory assigned with an index unique for each filter one-dimensional filter component. The second phase is providing instead of the entire filter data an index to the filter memory, where predetermined filter data is stored. The indexing is performed at the encoder and at the decoder site in the same way.

## Claims

**1.** A method for encoding a video signal and providing the encoded video signal in form of a bitstream together with filter data for filtering of the video signal, the method comprising the steps of:

determining (S430) filter data of a first or a second component of a two-dimensional separable filter based on a filter-design image area in the video signal;

providing (S450) the determined filter data after determination with the bitstream of the encoded video signal;
assigning (S440) an index value to the determined filter data and storing the index value together with the associated filter data in a filter memory;
selecting (S412, S413) from the filter memory filter data of a first component and filter data of a second component of a two-dimensional separable filter for filtering a filter-application image area in the video signal and obtaining the associated first index value and second index value; and
providing (S415) the obtained index values with the bitstream of the encoded video signal.

**2.** A method for decoding a video signal encoded in form of a bitstream together with filter data for filtering of the video signal, the method comprising the steps of:

extracting (S510) filter data from the bitstream of the encoded video signal;
assigning (S550) an index value to the obtained filter data and storing the index value together with the associated filter data in a filter memory;
extracting (S532, S533) a first index and a second index from the bitstream and obtaining from the filter memory filter data of a first component associated with the first index and filter data of a second component associated with the second index; setting-up (S734) a two-dimensional separable filter based on the obtained filter data of a first component and filter data of a second component;
filtering (S735) a filter-application image area in the video signal with the two-dimensional separable filter.

**3.** The method according to claim 1 wherein the step (S412, S413) of selecting the component filter data from the filter memory for a current filter-application image area selects the component filter data which have been determined for a filter-design image area preceding the current filter-application image area.

**4.** The method according to any of claims 1 to 3 wherein the filter data comprises filter coefficients, and the values of the first and the second index provided within the bitstream for a current block are encoded based on a prediction using the values of the first or the second indexes of a block adjacent to the current block.

**5.** The method according to any of claims 1 to 4 wherein the second index provided within the bitstream for a current block is encoded based on a prediction using the value of the first index of the current block

**6.** The method according to any of claims 1 to 5 wherein the filter-application image area is an image block and the filter data is provided for each slice within the slice header.

**7.** The method according to any of claims 1 to 6, wherein the step (S440, S550) of index generation assigns to the determined filter data an index value proportional to the time of storing the determined filter data in the filter memory.

**8.** The method according to any of claims 1 to 7, wherein more filter data (1392) is provided for one of the first and second component of a two-dimensional separable filter, in particular said first component and said second component being a horizontal component and a vertical component of a two-dimensional separable filter wherein more filter data is provided for said horizontal component than for said vertical component.

**9.** A computer program product comprising a computer readable medium having a computer readable program code embodied thereon, the program code being adapted to carry out the method according to any of claims 1 to 8.

**10.** An apparatus for encoding a video signal and providing the encoded video signal in form of a bitstream together with filter data for filtering of the video signal, the apparatus comprising:

a filter calculator (1310) for determining filter data (1392) of a first or a second component of a two-dimensional separable filter based on a filter-design image area in the video signal, wherein the determined filter data (1392) after determination are provided with the bitstream of the encoded video signal;
an index generator (1320) for assigning an index value to the determined filter data;
a filter memory (1330) for storing the index value together with the associated filter data; and
filter selector (1350) for selecting from the filter memory (1330) filter data of a first component and filter data of a second component of a two-dimensional separable filter for filtering (1150) a filter-application image area in the video signal and obtaining the associated first index value and second index value, wherein the obtained index values are provided with the bitstream of the encoded video signal.

**11.** An apparatus for decoding an encoded video signal for decoding a video signal encoded in form of a bitstream together with filter data for filtering of the video signal, the apparatus comprising:

a first extractor (1290) for extracting filter data (1492) from the bitstream of the encoded video signal;
an index generator (1420) for assigning an index value to the extracted filter data;
a filter memory (1430) for storing the index value together with the associated filter data;
a second extractor (1290) for extracting a first index and a second index (1495) from the bitstream;
a filter selector (1450) for obtaining from the filter memory (1430) filter data of a first component associated with the first index and filter data of a second component associated with the second index;
a filter set-up unit (1460) for setting-up a two-dimensional separable filter (1250) based on the obtained filter data of a first component and filter data of a second component;
the two-dimensional separable filter (1250) for filtering a filter-application image area in the video signal.

**12.** The apparatus according to claim 10 wherein the filter selector (1350) selects from the filter memory for a current filter-application image area the component filter data, which have been determined for a filter-design image area preceding the current filter-application image area.

**13.** The apparatus according to any of claims 10 to 12 wherein the filter data comprises filter coefficients, and the values of the first and the second index provided within the bitstream for a current block are encoded based on a prediction using the values of the first or the second indexes of a block adjacent to the current block.

**14.** The apparatus according to any of claims 10 to 13 wherein the second index provided within the bitstream for a current block is encoded based on a prediction using the value of the first index of the current block

**15.** The apparatus according to any of claims 10 to 14 wherein the filter-application image area is an image block and the filter data is provided for each slice within the slice header.

**16.** The apparatus according to any of claims 10 to 15, wherein the index generator (1320, 1420) is configured to assign to the determined filter data an index value proportional to the time of storing the determined filter data in the filter memory.

**17.** The apparatus according to any of claims 10 to 16, wherein more filter data (1392) is provided for one of the first and second component of a two-dimensional separable filter, in particular said first component and said second component being a horizontal component and a vertical component of a two-dimensional separable filter wherein more filter data is provided for said horizontal component than for said vertical component.

Fig. 1

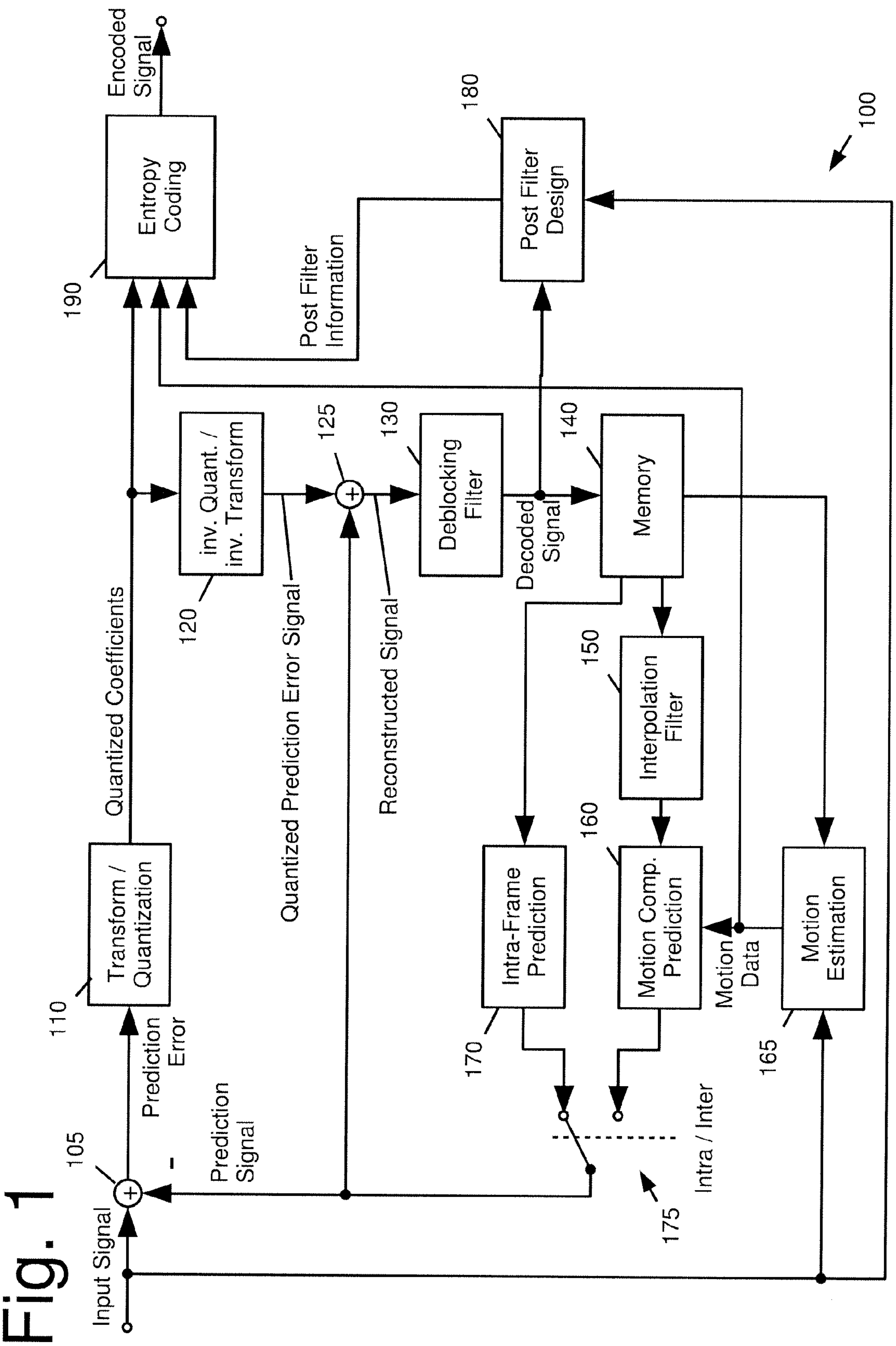
Input Signal
105
Prediction Error
-
Prediction Signal
110
Transform / Quantization
Quantized Coefficients
120
inv. Quant. / inv. Transform
Quantized Prediction Error Signal
125
Reconstructed Signal
130
Deblocking Filter
Decoded Signal
140
Memory
150
Interpolation Filter
160
Motion Comp. Prediction
170
Intra-Frame Prediction
165
Motion Estimation
Motion Data
175
Intra / Inter
180
Post Filter Design
Post Filter Information
190
Entropy Coding
Encoded Signal
100

Fig. 2

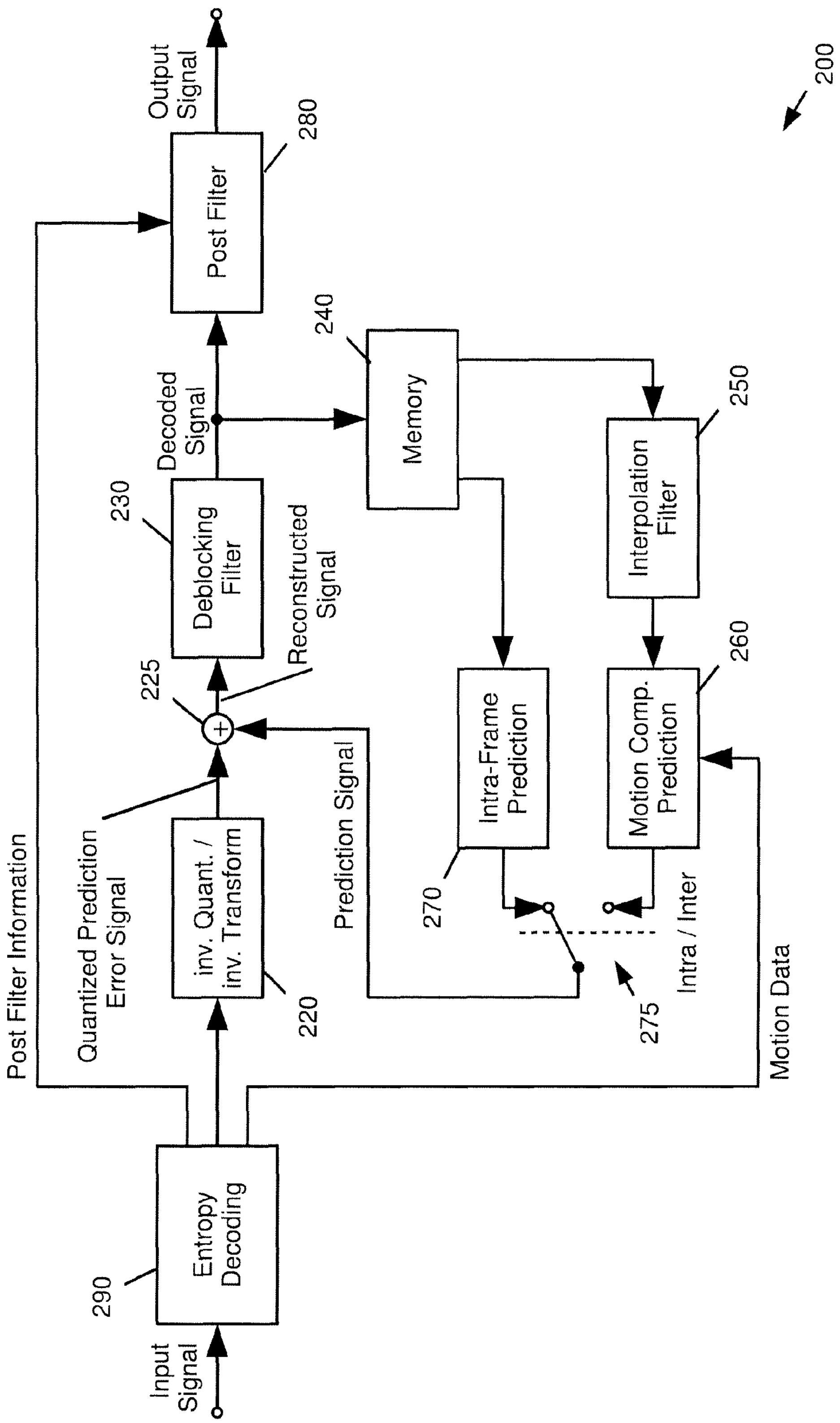
Input Signal
290
Entropy Decoding
Post Filter Information
Quantized Prediction Error Signal
inv. Quant. / inv. Transform
220
225
Reconstructed Signal
230
Deblocking Filter
Decoded Signal
Post Filter
280
Output Signal
240
Memory
250
Interpolation Filter
Prediction Signal
Intra-Frame Prediction
270
Motion Comp. Prediction
260
275
Intra / Inter
Motion Data
200

Fig. 3

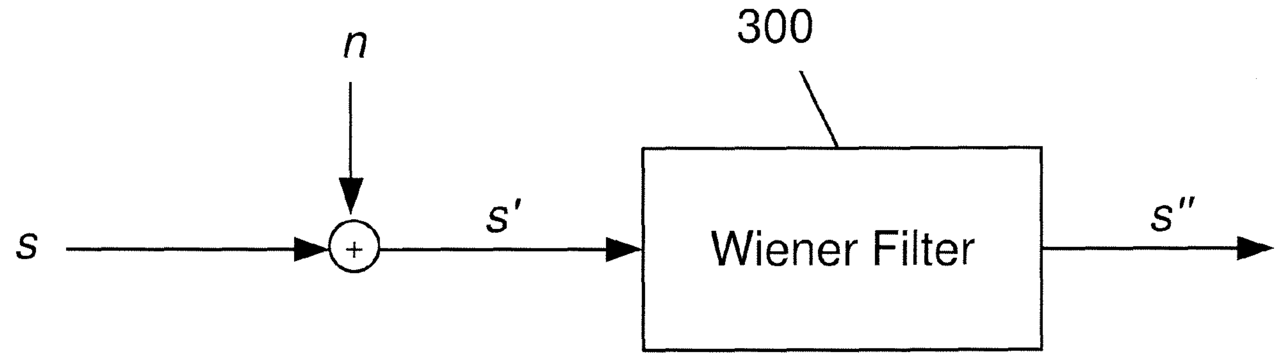


Fig. 10

1000

| | filter data | | | | | |
|---|---|---|---|---|---|---|
| index | $c_1$ | $c_2$ | $c_3$ | $c_4$ | $c_5$ | $c_6$ |
| 0 | 0.02 | -0.15 | 0.63 | 0.63 | -0.15 | 0.02 |
| 1 | -0.07 | 0.45 | 0.28 | 0.27 | -0.02 | -0.05 |
| ... | ... | ... | ... | ... | ... | ... |
| N | -0.11 | 0.23 | -0.47 | 0.72 | 0.42 | 0.21 |

Fig. 4

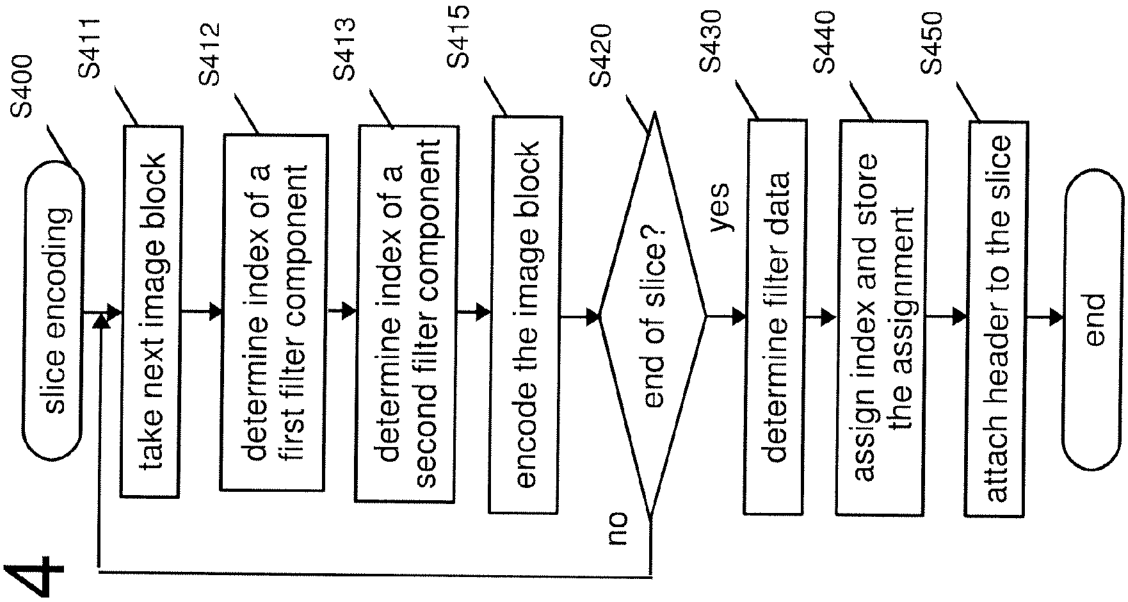
slice encoding
S400
take next image block
S411
determine index of a first filter component
S412
determine index of a second filter component
S413
encode the image block
S415
end of slice?
S420
no
yes
determine filter data
S430
assign index and store the assignment
S440
attach header to the slice
S450
end

Fig. 5

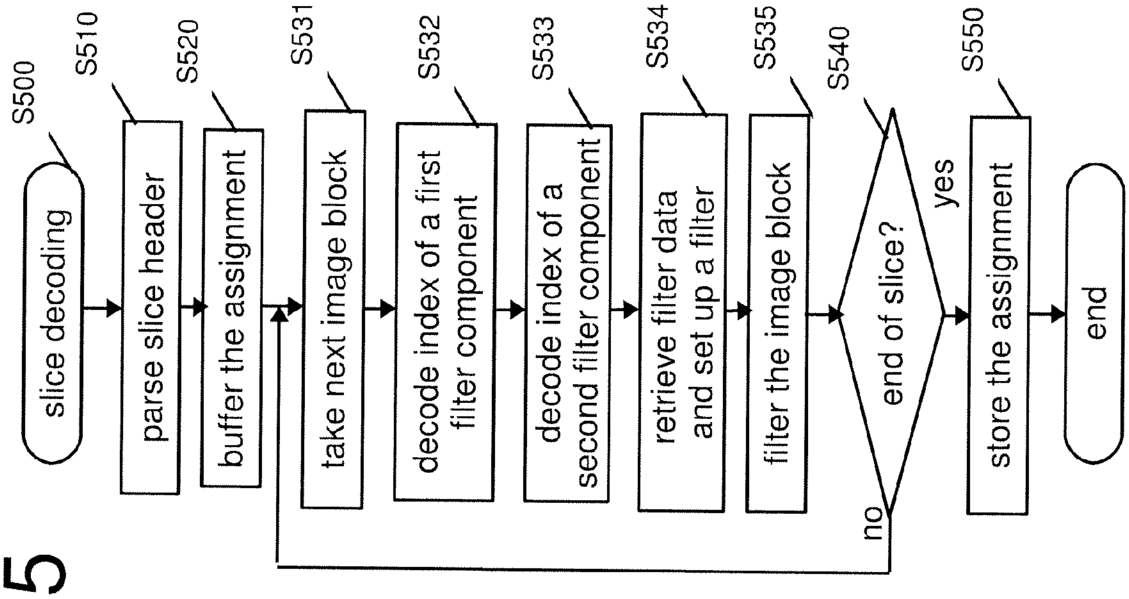
slice decoding
S500
parse slice header
S510
buffer the assignment
S520
take next image block
S531
decode index of a first filter component
S532
decode index of a second filter component
S533
retrieve filter data and set up a filter
S534
filter the image block
S535
end of slice?
S540
no
yes
store the assignment
S550
end

Fig. 6

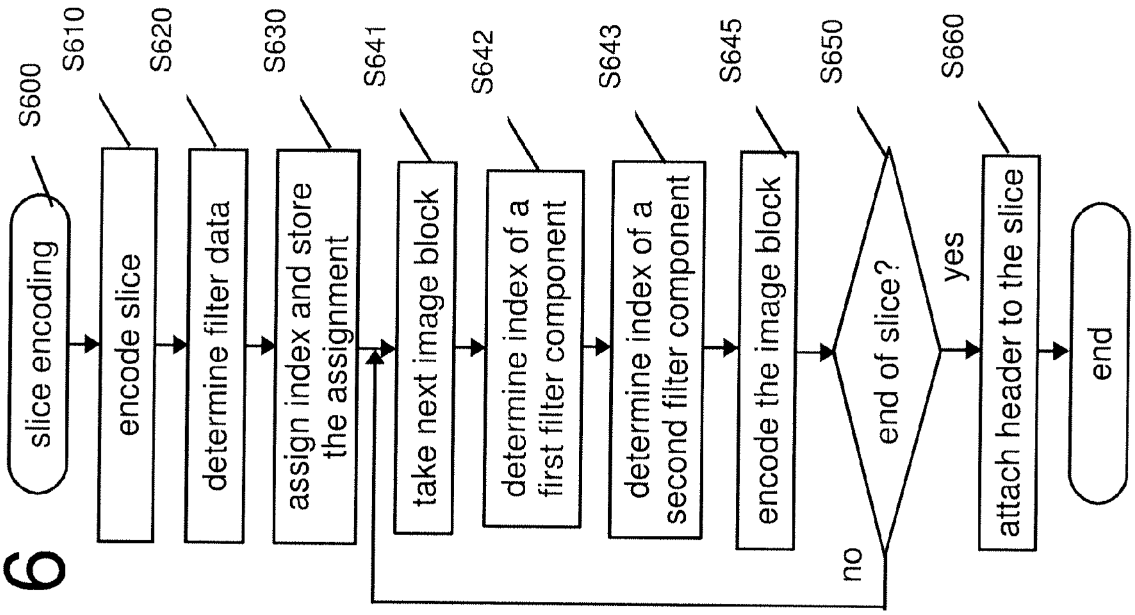
slice encoding
S600
encode slice
S610
determine filter data
S620
assign index and store the assignment
S630
take next image block
S641
determine index of a first filter component
S642
determine index of a second filter component
S643
encode the image block
S645
end of slice?
S650
no
yes
attach header to the slice
S660
end

Fig. 7

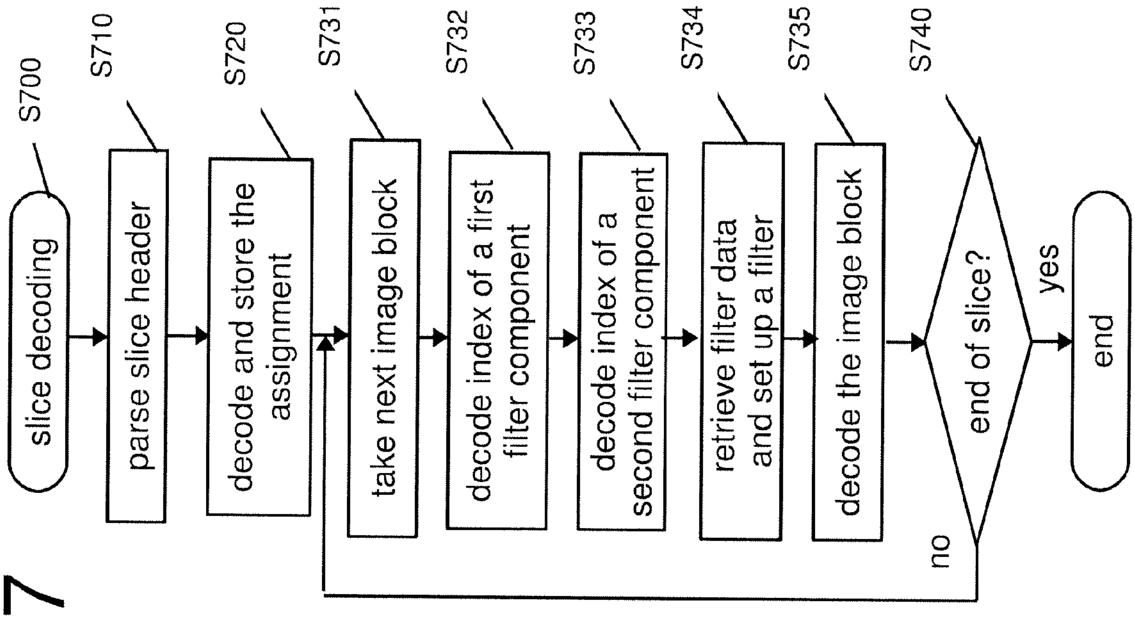
slice decoding
S700
parse slice header
S710
decode and store the assignment
S720
take next image block
S731
decode index of a first filter component
S732
decode index of a second filter component
S733
retrieve filter data and set up a filter
S734
decode the image block
S735
end of slice?
S740
no
yes
end

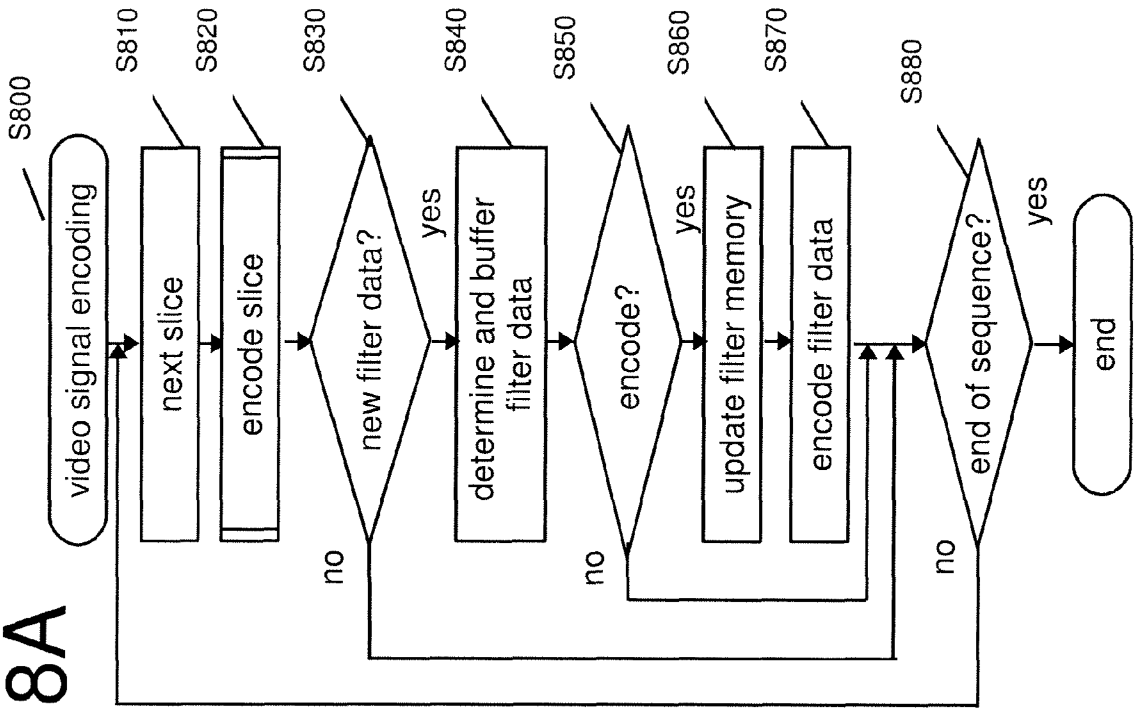
video signal encoding
S800
next slice
S810
encode slice
S820
new filter data?
S830
yes
no
determine and buffer filter data
S840
encode?
S850
yes
no
update filter memory
S860
encode filter data
S870
end of sequence?
S880
yes
no
end

Fig. 8A

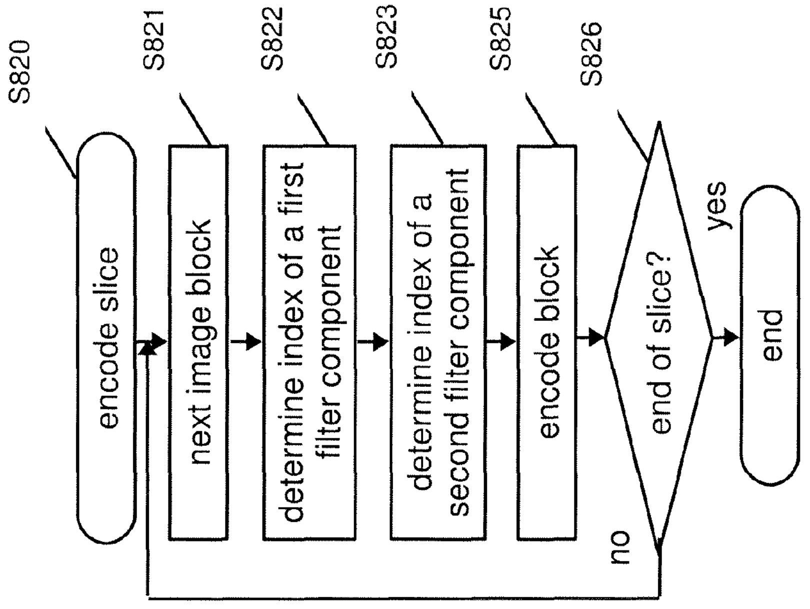
encode slice
S820
next image block
S821
determine index of a first filter component
S822
determine index of a second filter component
S823
encode block
S825
end of slice?
S826
yes
no
end

Fig. 8B

Fig. 9A

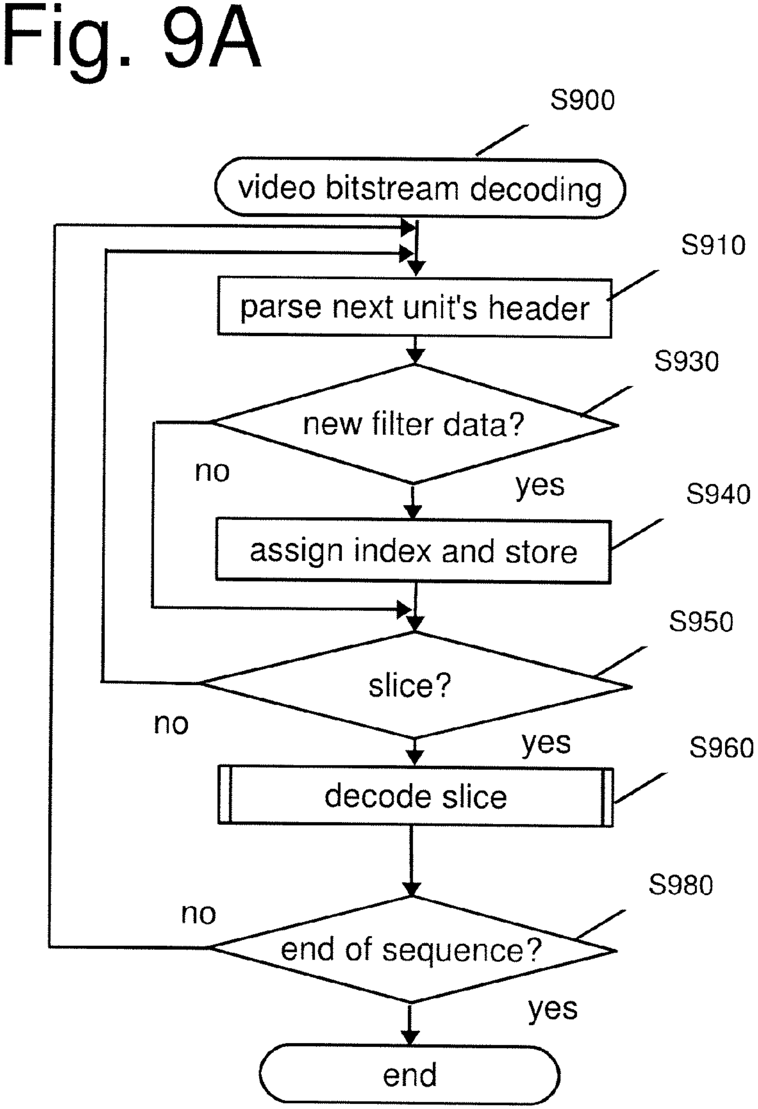
S900
video bitstream decoding
S910
parse next unit's header
S930
new filter data?
no
yes
S940
assign index and store
S950
slice?
no
yes
S960
decode slice
S980
no
end of sequence?
yes
end

Fig. 9B

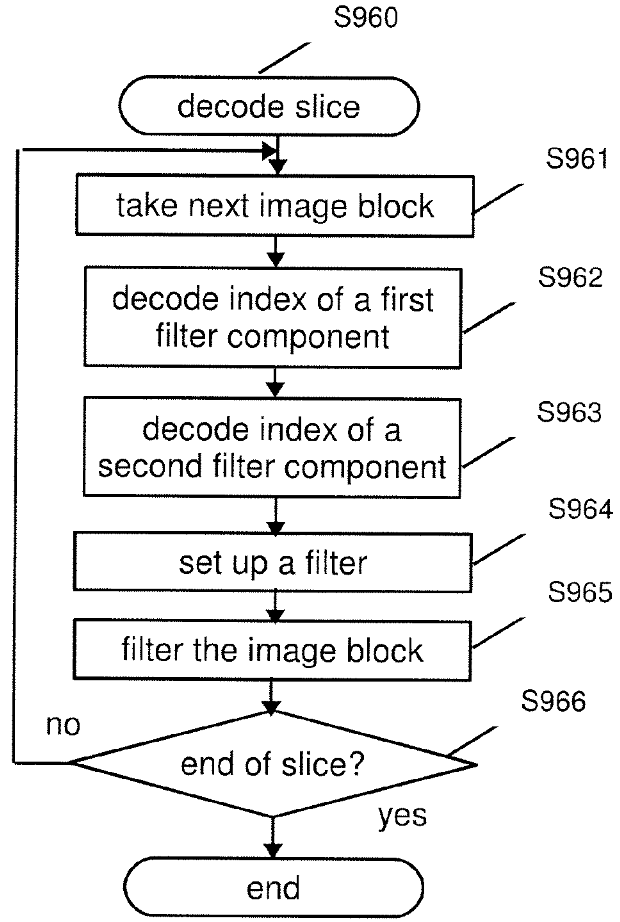
S960
decode slice
S961
take next image block
S962
decode index of a first filter component
S963
decode index of a second filter component
S964
set up a filter
S965
filter the image block
S966
no
end of slice?
yes
end

Fig. 11

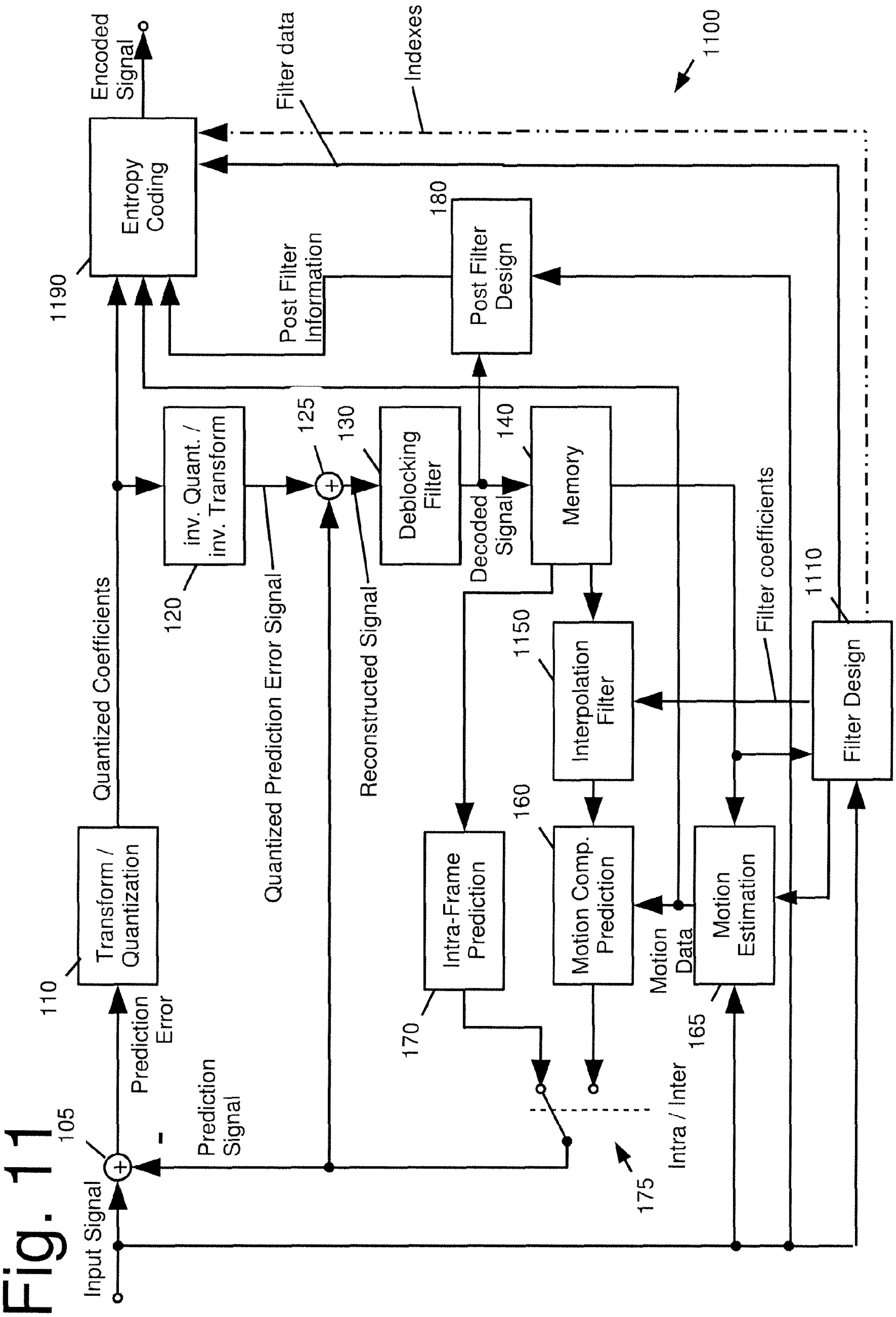
Input Signal
105
Prediction Error
110
Transform / Quantization
Quantized Coefficients
1190
Entropy Coding
Encoded Signal
120
inv. Quant. / inv. Transform
Quantized Prediction Error Signal
125
Prediction Signal
-
Reconstructed Signal
130
Deblocking Filter
Decoded Signal
140
Memory
180
Post Filter Design
Post Filter Information
Filter data
Indexes
1100
1150
Interpolation Filter
160
Motion Comp. Prediction
Motion Data
165
Motion Estimation
170
Intra-Frame Prediction
175
Intra / Inter
1110
Filter Design
Filter coefficients

Fig. 12

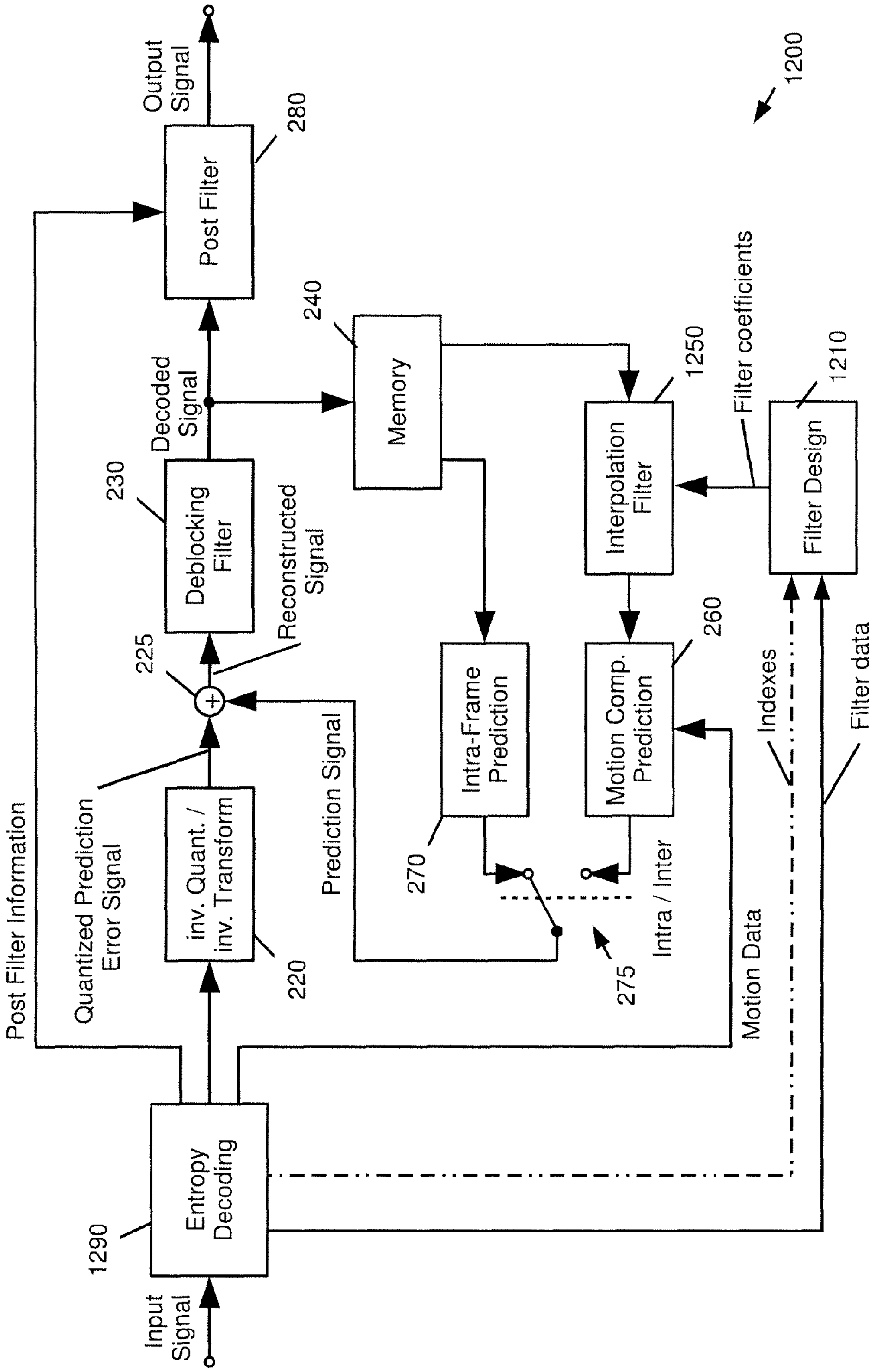
Input Signal
Entropy Decoding
1290
Post Filter Information
Quantized Prediction Error Signal
inv. Quant. / inv. Transform
220
225
Reconstructed Signal
Deblocking Filter
230
Decoded Signal
Post Filter
280
Output Signal
Memory
240
Prediction Signal
Intra-Frame Prediction
270
Motion Comp. Prediction
260
Intra / Inter
275
Motion Data
Interpolation Filter
1250
Filter coefficients
Filter Design
1210
Indexes
Filter data
1200

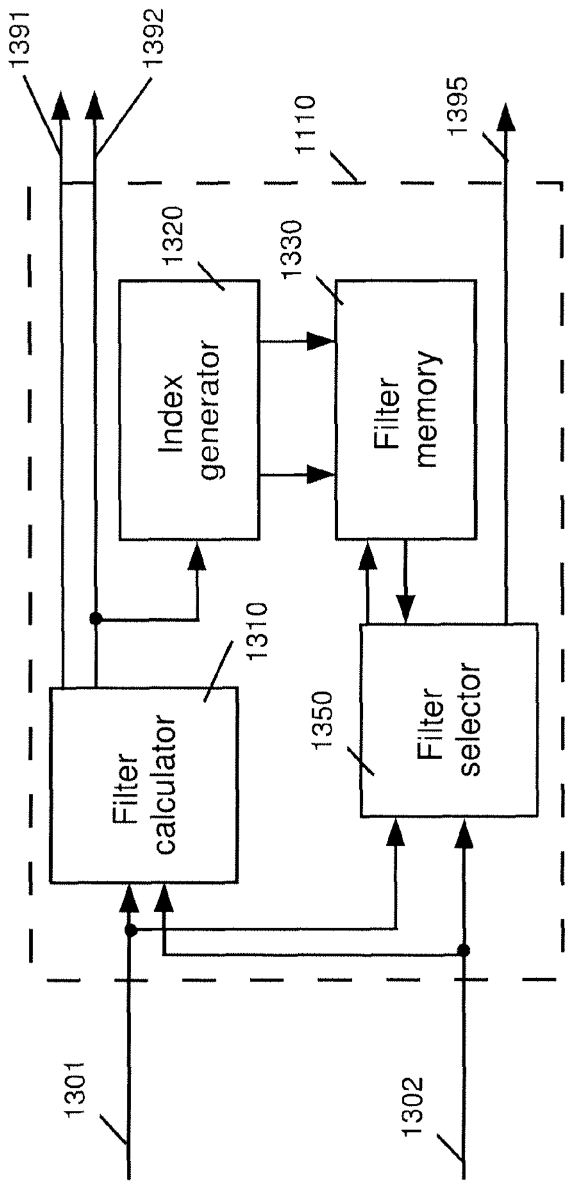
1391
1392
1110
1395
1320
Index generator
1330
Filter memory
1310
Filter calculator
1350
Filter selector
1301
1302

Fig. 13

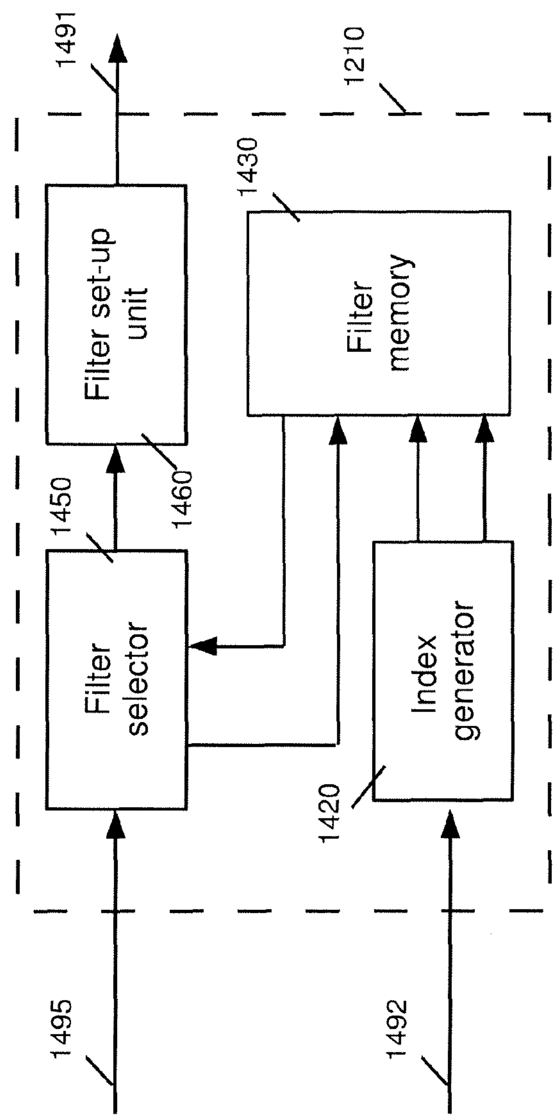
1491
1210
Filter set-up unit
1430
Filter memory
1450
1460
Filter selector
Index generator
1420
1495
1492

Fig. 14

Fig. 15

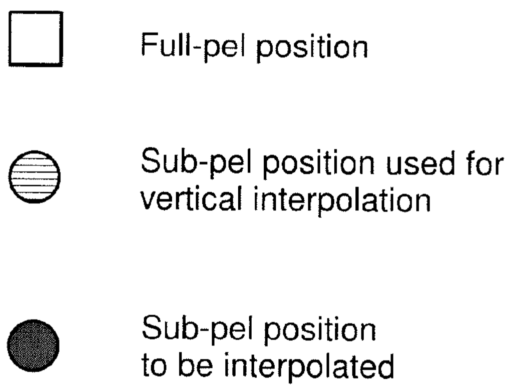
Full-pel position
Sub-pel position used for vertical interpolation
Sub-pel position to be interpolated

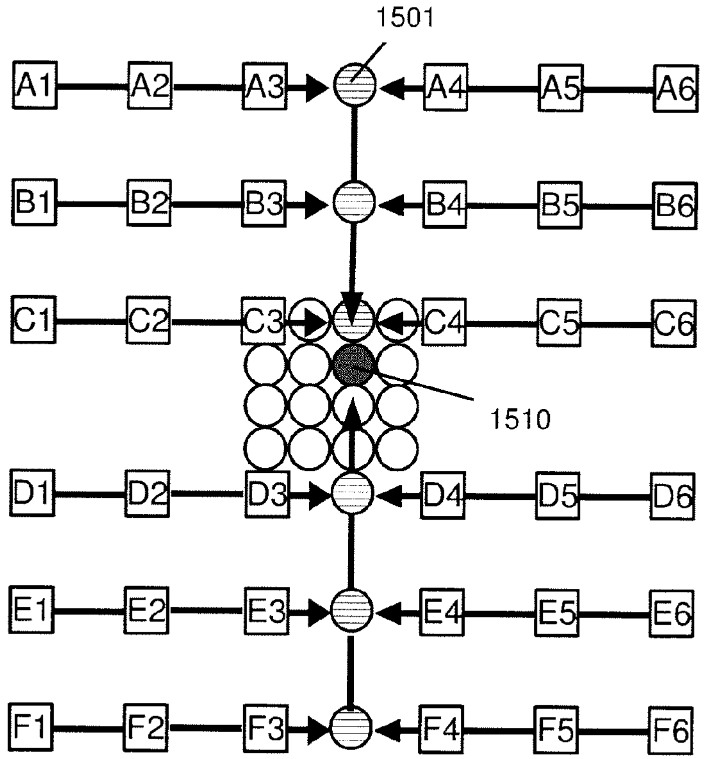
1501
1510
A1
A2
A3
A4
A5
A6
B1
B2
B3
B4
B5
B6
C1
C2
C3
C4
C5
C6
D1
D2
D3
D4
D5
D6
E1
E2
E3
E4
E5
E6
F1
F2
F3
F4
F5
F6

Fig. 16

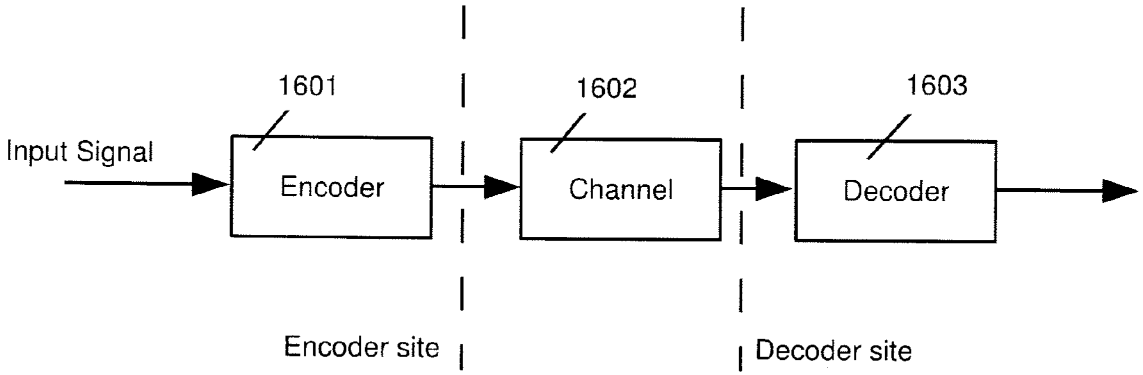
Input Signal
1601
Encoder
1602
Channel
1603
Decoder
Encoder site
Decoder site

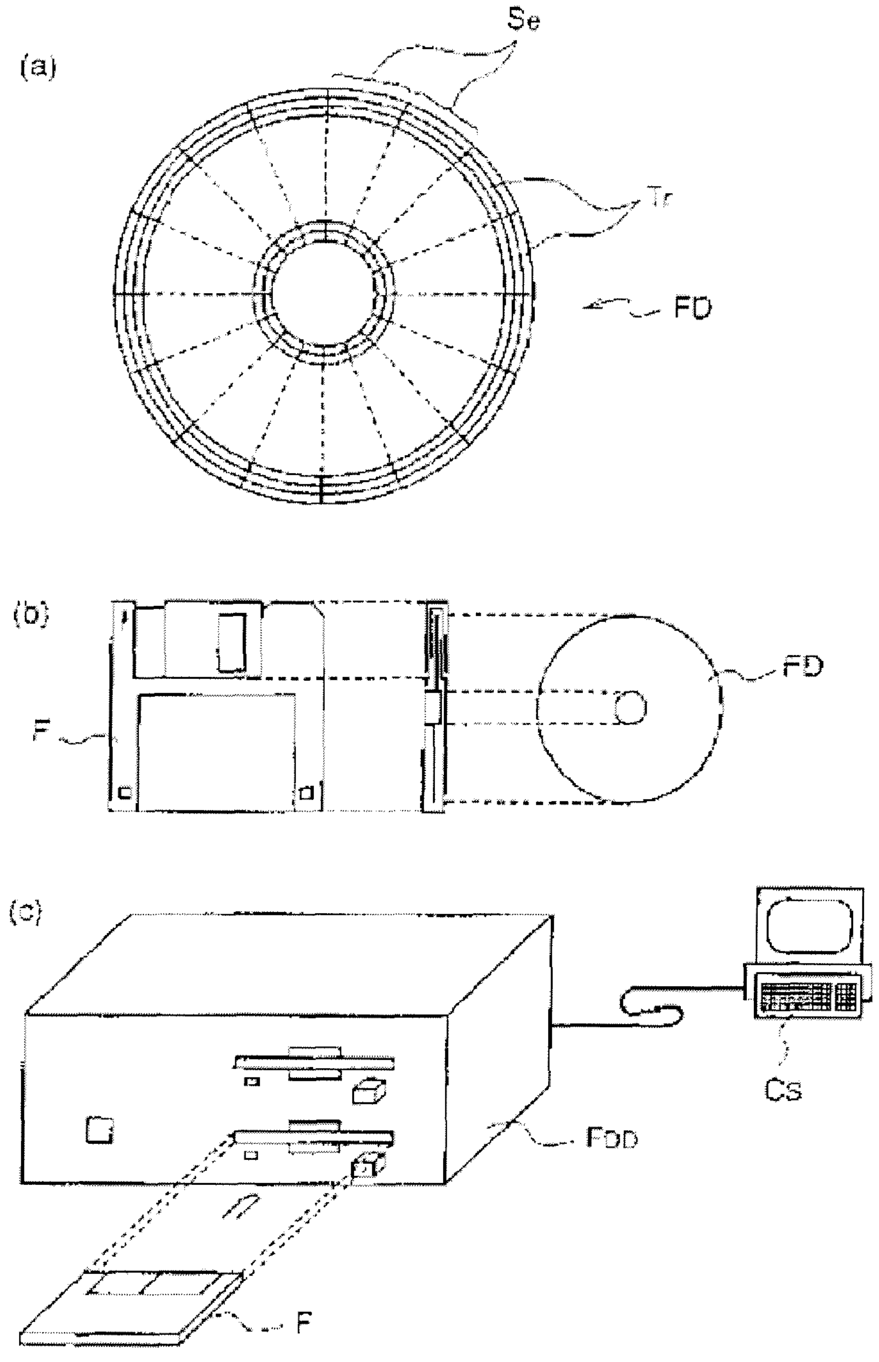


Fig. 17

Fig. 18

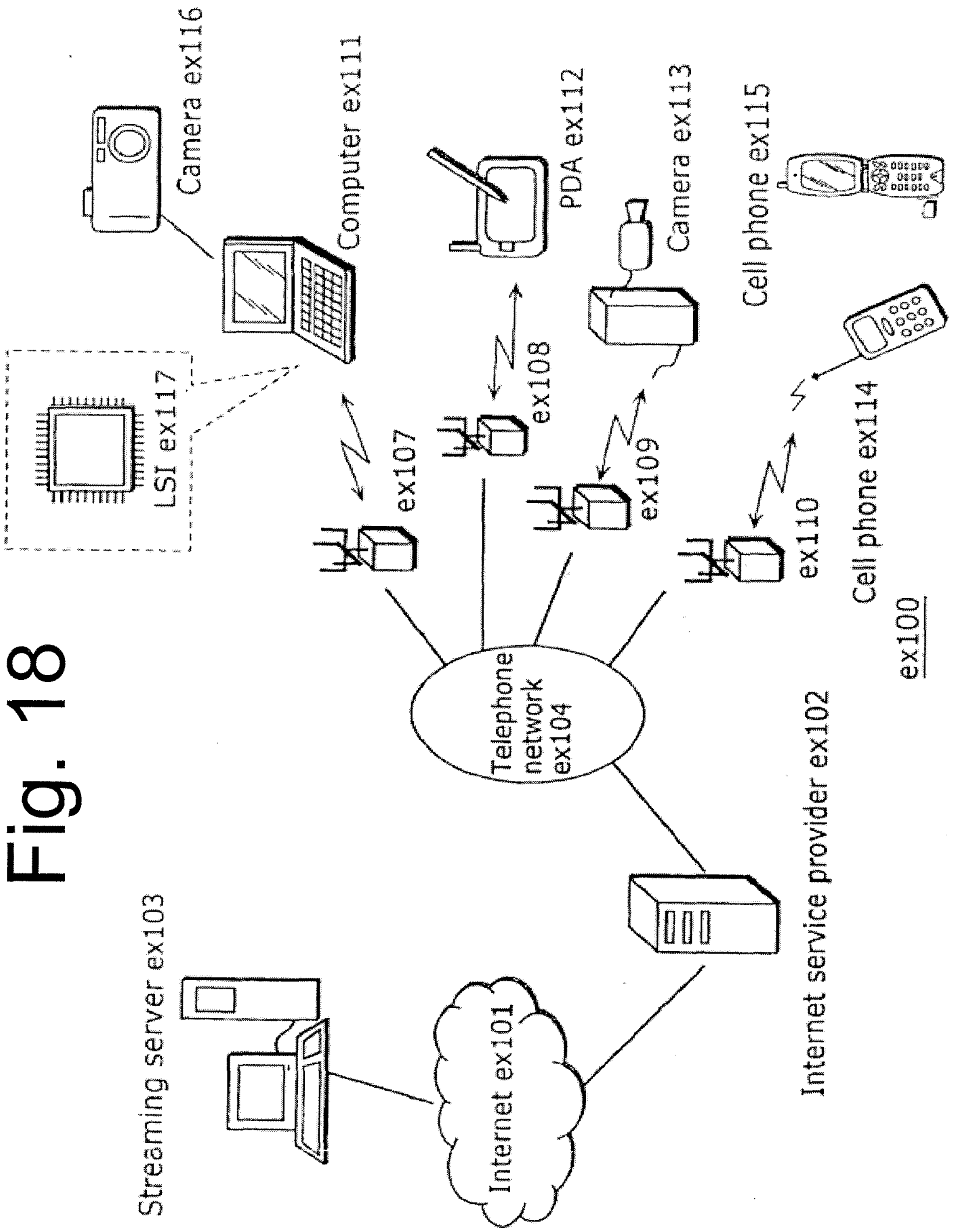
Camera ex116
Computer ex111
LSI ex117
PDA ex112
Camera ex113
Cell phone ex115
ex107
ex108
ex109
ex110
Cell phone ex114
ex100
Telephone network ex104
Internet service provider ex102
Streaming server ex103
Internet ex101

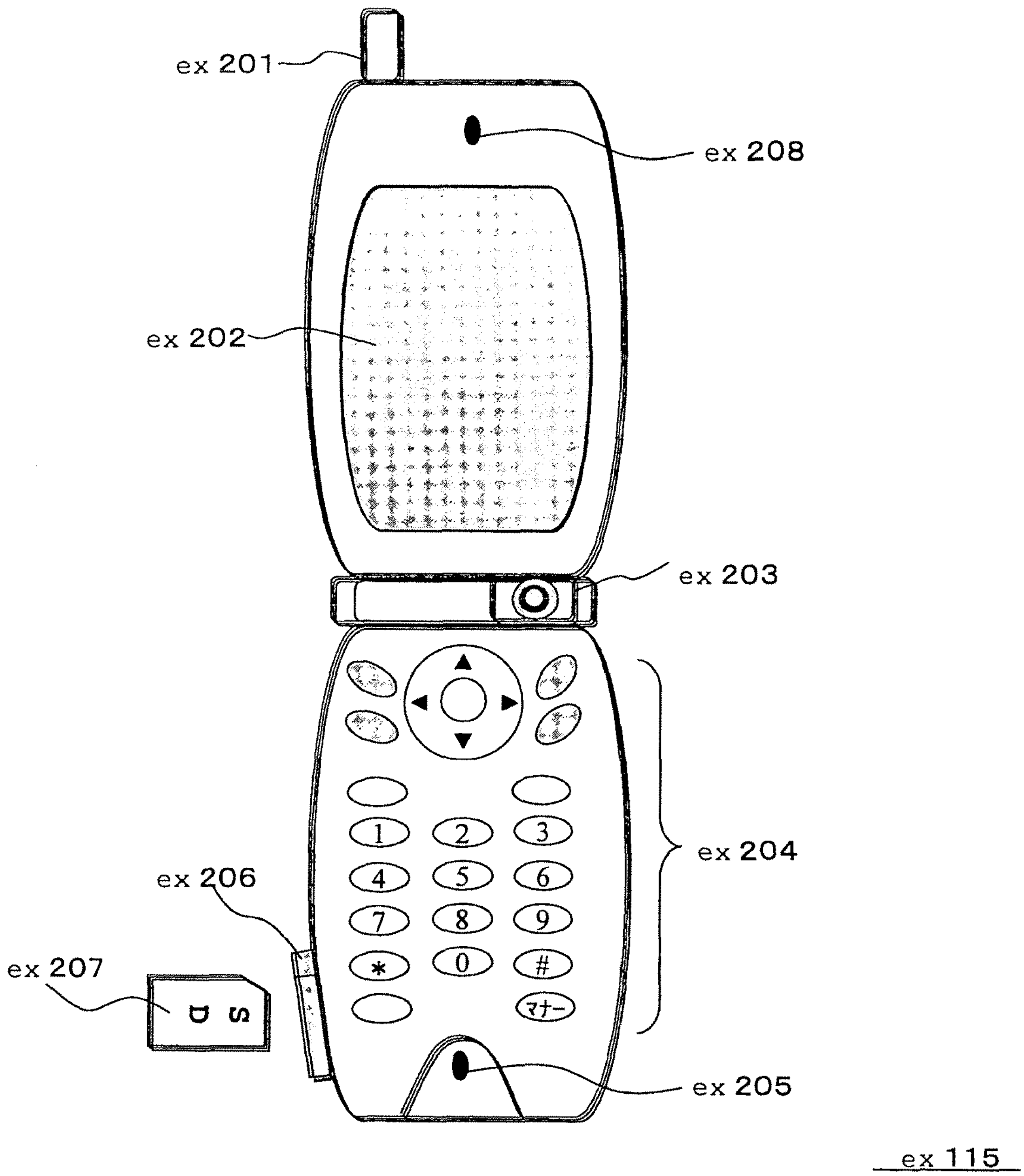
ex 201
ex 208
ex 202
ex 203
ex 204
ex 206
ex 207
S
D
1
2
3
4
5
6
7
8
9
*
0
#
ﾏﾅｰ
ex 205
ex 115

Fig. 19

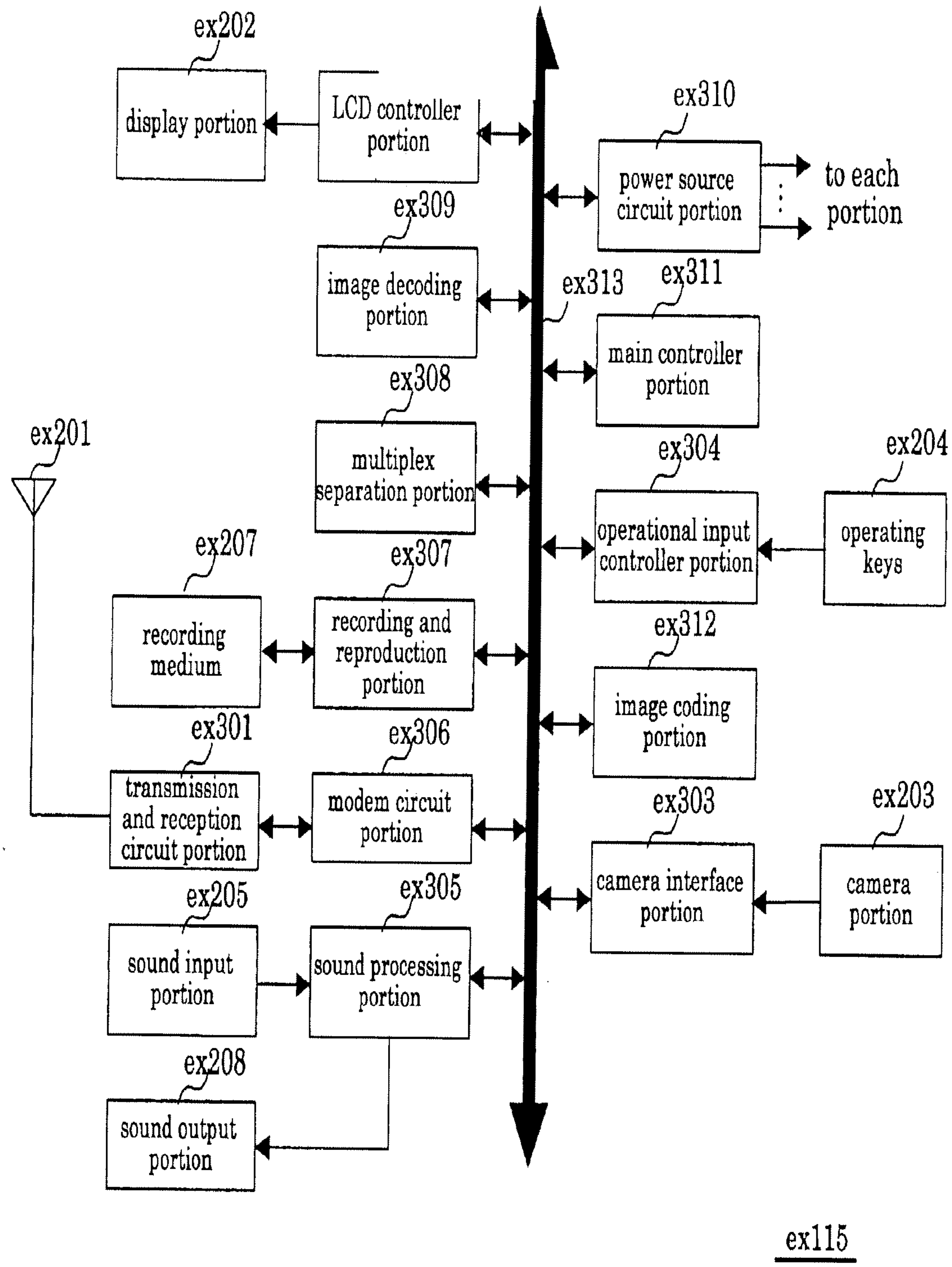
ex202
display portion
LCD controller portion
ex310
power source circuit portion
to each portion
ex309
image decoding portion
ex313
ex311
main controller portion
ex308
multiplex separation portion
ex201
ex304
operational input controller portion
ex204
operating keys
ex207
recording medium
ex307
recording and reproduction portion
ex312
image coding portion
ex301
transmission and reception circuit portion
ex306
modem circuit portion
ex303
camera interface portion
ex203
camera portion
ex205
sound input portion
ex305
sound processing portion
ex208
sound output portion
ex115

Fig. 20

Fig. 21

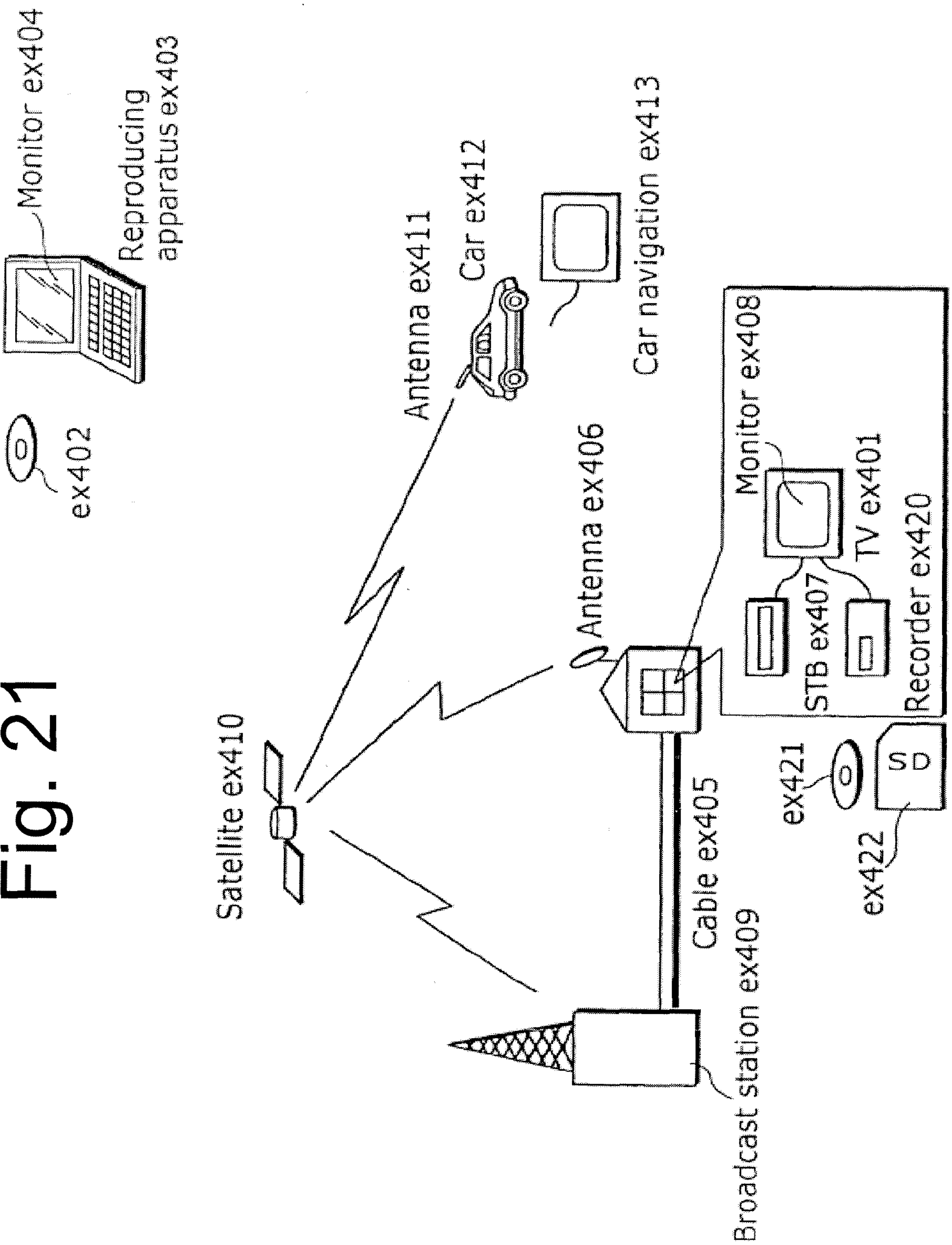
Monitor ex404
Reproducing apparatus ex403
ex402
Antenna ex411
Car ex412
Car navigation ex413
Satellite ex410
Antenna ex406
Monitor ex408
TV ex401
STB ex407
Recorder ex420
ex421
ex422
SD
Cable ex405
Broadcast station ex409

Europäisches Patentamt
European Patent Office
Office européen des brevets

# EUROPEAN SEARCH REPORT

Application Number
EP 09 16 2456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 845 729 A1 (MATSUSHITA ELECTRIC IND CO LTD [JP]) 17 October 2007 (2007-10-17)<br>* abstract *<br>* paragraph [0001] - paragraph [0003] *<br>* paragraph [0010] - paragraph [0023] *<br>* paragraph [0026] - paragraph [0027] *<br>* paragraph [0048] - paragraph [0050] *<br>* paragraph [0056] *<br>* paragraph [0062] - paragraph [0064] *<br>* figures 3-7 *<br>----- | 1-6,9-14 | INV.<br>H04N7/26<br>H04N7/32<br>H04N7/50<br>H04N7/28 |
| Y | WO 2007/084301 A2 (DEMOS GARY [US]) 26 July 2007 (2007-07-26)<br>* abstract *<br>* paragraph [0015] *<br>* paragraph [0028] *<br>* paragraph [0036] - paragraph [0041] *<br>* figures 1,2 *<br>----- | 1-6,9-14 | |
| A | WEDI T: "Advanced Motion Compensated Prediction Methods"<br>ITU-T VIDEO CODING EXPERTS GROUP (ITU-T SG16 Q.6), 18 October 2003 (2003-10-18), pages 1-8, XP002454495<br>* page 2, line 4 - page 3, line 3 *<br>* page 3, line 17 - line 24 *<br>* figure 2 *<br>----- | 1,2,5, 9-11,14 | TECHNICAL FIELDS SEARCHED (IPC)<br>H04N |
| A | EP 0 930 787 A2 (NEC CORP [JP]) 21 July 1999 (1999-07-21)<br>* abstract *<br>* paragraph [0006] *<br>* paragraph [0014] - paragraph [0018] *<br>* paragraph [0020] - paragraph [0032] *<br>* figures 2,9A *<br>-----<br>-/-- | 1-6,9-14 | |

The present search report has been drawn up for all claims

| Place of search | Date of completion of the search | Examiner |
|---|---|---|
| Berlin | 22 October 2010 | Sampels, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 09 16 2456

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| A | "Section 3 Dictionary Methods"<br>In: SALOMON D: "Data Compression: The Complete Reference"<br>1998, Springer , New York, NY, US , XP002150106<br>ISBN: 978-0-387-98280-9 , pages 101-162<br>* the whole document *<br>----- | 1-17 | |
| A | EP 1 435 740 A1 (VISIOWAVE S A [CH])<br>7 July 2004 (2004-07-07)<br>* abstract *<br>* paragraph [0016] *<br>* figures 2,3,5 *<br>----- | 1,2,9-11 | |
| A | LIST P ET AL: "Adaptive deblocking filter"<br>IEEE TRANSACTIONS ON CIRCUITS AND SYSTEMS FOR VIDEO TECHNOLOGY,<br>vol. 13, no. 7, 1 July 2003 (2003-07-01), pages 614-619, XP011221094<br>IEEE, Piscataway, NJ, US<br>ISSN: 1051-8215<br>* abstract *<br>* page 614, left-hand column, line 21 - line 22 *<br>* page 614, right-hand column, line 10 - line 28 *<br>* page 616, left-hand column, line 18 - line 37 *<br>* page 616, right-hand column, line 19 - line 25 *<br>* page 616, right-hand column, line 45 - line 49 *<br>* figure 1 *<br>* table 1 *<br>----- | 1-6,9-14 | TECHNICAL FIELDS SEARCHED (IPC) |

The present search report has been drawn up for all claims

| Place of search | Date of completion of the search | Examiner |
|---|---|---|
| Berlin | 22 October 2010 | Sampels, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 16 2456

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2010

| Patent document cited in search report | Publication date | Patent family member(s) | Publication date |
|---|---|---|---|
| EP 1845729 A1 | 17-10-2007 | NONE | |
| WO 2007084301 A2 | 26-07-2007 | EP 1972150 A2 | 24-09-2008 |
| EP 0930787 A2 | 21-07-1999 | DE 69839144 T2 | 05-06-2008 |
| | | JP 3111958 B2 | 27-11-2000 |
| | | JP 11191154 A | 13-07-1999 |
| EP 1435740 A1 | 07-07-2004 | AU 2003288622 A1 | 22-07-2004 |
| | | WO 2004059984 A1 | 15-07-2004 |
| | | US 2006203906 A1 | 14-09-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 080156615 A
- EP 08015661 A


### Non-patent literature cited in the description


- Adaptive Filter Theory. **S. Haykin.** Prentice Hall Information and System Sciences Series. Prentice Hall, 2002